(19) Europäisches Patentamt
European Patent Office
Office européen des brevets

(11) **EP 2 811 781 A1**

(12) **EUROPEAN PATENT APPLICATION**
published in accordance with Art. 153(4) EPC

(43) Date of publication:
**10.12.2014 Bulletin 2014/50**

(21) Application number: **12867008.0**

(22) Date of filing: **01.02.2012**

(51) Int Cl.:
*H04W 28/16* (2009.01)  *H04W 16/28* (2009.01)
*H04W 24/10* (2009.01)

(86) International application number:
**PCT/JP2012/000694**

(87) International publication number:
**WO 2013/114460 (08.08.2013 Gazette 2013/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventor: **JITSUKAWA, Daisuke
Kawasaki-shi
Kanagawa 211-8588 (JP)**

(74) Representative: **Lewin, David Nicholas
Haseltine Lake LLP
Lincoln House, 5th Floor
300 High Holborn
London WC1V 7JH (GB)**

(54) **WIRELESS COMMUNICATION SYSTEM, WIRELESS TERMINAL, WIRELESS BASE STATION, AND WIRELESS COMMUNICATION METHOD**

(57)     A wireless communication system including: a wireless base station that performs joint transmission with another wireless base station to transmit same data to a wireless terminal, and the wireless terminal that transmits feedback information to the wireless base station, the feedback information being related to reception quality for each frequency domain based on a channel estimation value for each frequency domain when the wireless base station and the another wireless base station perform the joint transmission.

FIG. 5

**Description**

FIELD

The present invention relates to a wireless communication system, a wireless terminal, a wireless base station, and a wireless communication method.

BACKGROUND

In recent years, discussions have been held regarding next-generation wireless communication technology for wireless communication systems, such as mobile phone systems (cellular systems), to achieve higher speed, larger capacity, and the like in wireless communication. For example, the 3rd Generation Partnership Project (3GPP), which is a standards organization, has proposed a communication standard referred to as Long Term Evolution (LTE) and a communication standard referred to as LTE-Advanced (LTE-A) based on the wireless communication technology in LTE.

The latest communication standard completed by the 3GPP is Release 10 that corresponds to LTE-A. Release 10 is a significant functional expansion of Releases 8 and 9 corresponding to LTE. Intense discussion is currently being held for the completion of Release 11, which is a further expansion of Release 10. Hereinafter, unless otherwise stated, "LTE" includes, in addition to LTE and LTE-A, other wireless communication systems that are expansions of LTE,

In Release 11 by the 3GPP, a technology referred to as coordinated multiple point (CoMP) is discussed in particular. CoMP may be considered a technology in which transmission and reception to and from a terminal are coordinated among differing cells. Although CoMP includes several formats, as downstream CoMP, joint transmission (JT), dynamic point selection (DPS), coordinated scheduling/beam-forming (CS/CB), and the like are known. "Downstream" refers to the direction from a base station to a wireless terminal (so-called downlink). Conversely, "upstream" refers to the direction from the wireless terminal to the base station (so-called uplink).

JT, which is one of CoMP, enables a plurality of cells to simultaneously transmit (jointly transmit) the same piece of data addressed to a certain wireless terminal, and is a technique providing a countermeasure against inter-cell interference for a downlink shared channel (physical downlink shared channel (PDSCH)). In a typical cellular system, the wireless terminal receives wireless signals from cells other than a connected cell as interference signals. Conversely, in JT, PDSCHs having the same signal components are transmitted from a plurality of cells including the connected cell to a specific wireless terminal. In other words, because the wireless terminal also receives the wireless signals from cells other than the connected cell as desired signals, inter-cell interference is able to be reduced. A cell refers to an area covered by a base station to enable a wireless terminal to receive wireless signals. However, because the base station and the cell are substantially corresponding concepts, the "cell" and the "base station" may be interchangeably read as appropriate in the description hereafter.

In DPS, which is one of CoMP, the same piece of data addressed to a wireless terminal is simultaneously present in a plurality of cells. However, data transmission to the wireless terminal is performed by a single cell. As a result, compared to typical cell selection in LTE that is based on a time-averaged channel state, a more dynamic cell selection that tracks fading variations becomes possible. In addition, in CS/CB, which is one of CoMP, transmission is performed from a single cell to a certain terminal in a certain sub-frame, and scheduling and beam-forming are performed under coordination among cells to reduce interference in another wireless terminal belonging to another cell. In the present document, in relation to JT which is joint transmission by a plurality of cells, DPS and CS/CB in which a plurality of cells perform a single transmission in coordination may be collectively referred to as a coordinated single transmission.

On the other hand, the base station in LTE performs scheduling of data transmission to a wireless terminal based on a channel quality indicator (CQI) which is feedback control information from the wireless terminal. Here, scheduling refers to allocation of wireless resources to the wireless terminal by the base station. The wireless resources are defined by a frequency axis and a time axis. For example, the base station in LTE receives the CQIs from the wireless terminal at 1.0 millisecond intervals. The base station then designates frequency and time to the wireless terminal and allocates the wireless resources, based on the received CQIs (ultimately, quality of service (QoS) and buffer content state are also considered).

The CQI is, simply put, an indicator indicating the reception quality of a wireless signal received by the wireless terminal from the base station. The base station knows the reception quality at the wireless terminal based on the feedback CQI, and performs scheduling so as to provide relatively more wireless resources to a wireless terminal having favorable reception quality. In addition, when the CQI is defined for each frequency domain (sub-band), the wireless base station preferentially allocates a sub-band having favorable reception quality from the perspective of the wireless terminal. In other words, when the reception quality is favorable, the wireless terminal receives greater allocation of sub-bands having favorable wireless quality and performs a large number of data receptions and transmissions. In this way, in LTE, as a result of CQI-based scheduling being performed, effective use of wireless resources is achieved and transmission efficiency (throughput) of the overall system is improved.

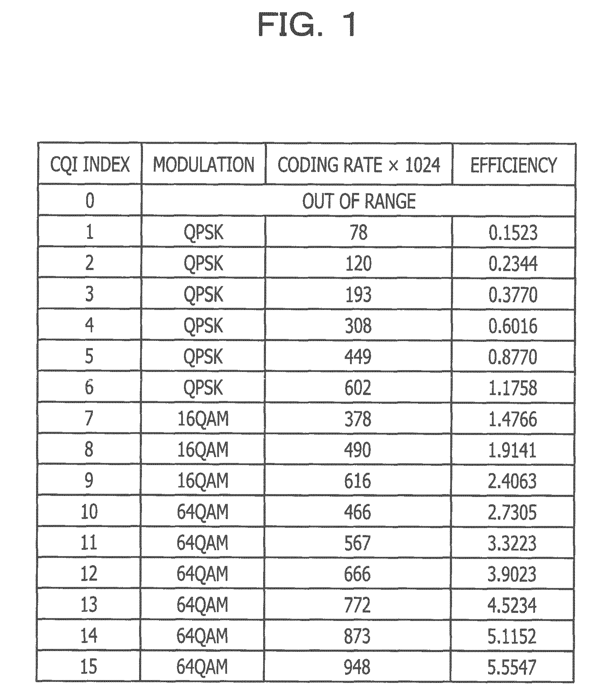

FIG. 1 illustrates the CQI prescribed in LTE. The CQI is calculated based on a signal-to-interference noise ratio (SINR) of a downlink wireless signal measured by the wireless terminal so that a block error rate (BLER) is 10% when a data signal using a transmission format corresponding to the CQI is received. The CQI may be defined per system bandwidth or sub-band (into which the system bandwidth is divided). As illustrated in FIG. 1, in LTE, the CQI is a piece of 4-bit control information and may be in the form of 16 types of values. A transmission format including a modulation method (modulation), a coding rate (coding rate), and the number of bits of information transmitted by a single modulation symbol (efficiency) is associated with each CQI value. Because the wireless terminal and the base station share this association, the transmission format to be used is able to be matched between the wireless terminal and the base station as a result of the wireless terminal feeding back the CQI to the base station.

In LTE, the above-described CQI is also used for purposes other than scheduling. For example, in LTE, adaptive modulation and coding (AMC) is used to actualize highly efficient and highly reliable data transmission. In AMC, control is performed to switch modulation and coding schemes (MCSs) that indicate combinations of modulation method and coding rate depending on the quality of a wireless channel. Here, the above-described CQI is used as an indicator that indicates a channel of wireless quality. As a result of AMC, a highly efficient MCS may be used while maintaining reception quality at a desired level. Therefore, transmission efficiency of data signals is able to be improved.

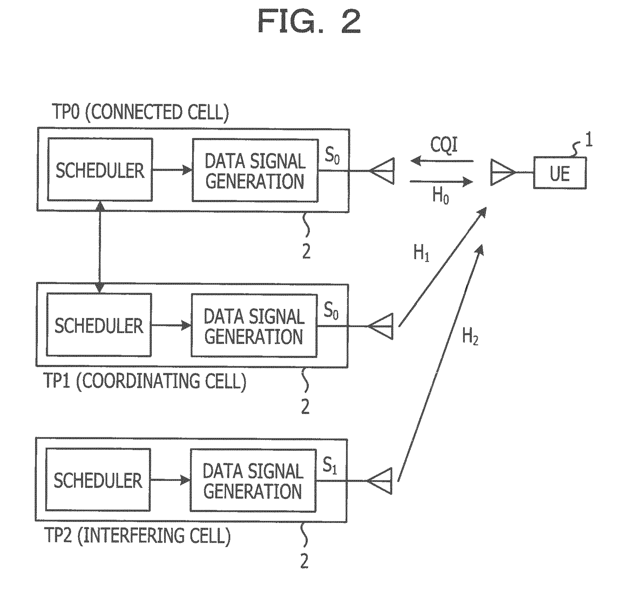

Next, CQI feedback under the premise of JT in CoMP in LTE will be described with reference to FIG. 2. FIG. 2 is a conceptual diagram of CQI feedback under the premise of JT. Types of transmitting stations for downlink wireless signals include, in addition to macro base stations (enhanced Node-Bs (eNBs)) which are typical wireless base stations, pico base stations that are small-scale wireless base stations, remote radio heads (RRHs) that are devices in which only the wireless communication function of the wireless base station is made independent, and the like. These transmitting stations are hereinafter collectively referred to as a transmission point (TP).

In FIG. 2, a TP0 is a TP that corresponds to a connected cell with which a wireless terminal (user equipment (UE)) exchanges control signals and the like. The TP0 transmits a data signal s0 to the UE. A TP1 is a TP that corresponds to a coordinating cell that coordinates with the connected cell TP0. The TP1 coordinates with the TP0 and transmits the same data signal s0 as the TP0 to the UE. As a method for selecting the coordinating cell, for example, a method is known in which, based on reference signal received power (RSRP) of a downstream wireless signal of each cell that is fed back from the UE, a cell in which a difference in RSRP with the connected cell is within a prescribed threshold is selected. A TP2 is a TP that corresponds to an interfering cell. The TP2 transmits a data signal differing from s0 to a different UE, without coordinating with the TP0 and the TP1. The UE feeds back the CQI, which is the control information desired for scheduling, to the TP0 that is the connected base station. The TP0 performs scheduling of wireless resources for the UE based on the feedback CQI. In addition, the TP0 transmits wireless resource information, data to be jointly transmitted (s0 in FIG. 2), and the like to the TP1, via a core network. The TP1 uses the wireless resource information and the data to be jointly transmitted that has been received from the TP0, and performs joint transmission together with the TP0.

The 3GPP proposes a per-point CQI approach as a feedback method for the CQI that takes into consideration CoMP. In the per-point CQI approach, the UE determines a per-point CQI for each TP, the per-point CQI being a CQI based on the SINR when a single TP performs data transmission without coordinating with another TP (referred to as a single-point transmission (ST) in relation to JT in CoMP). In the instance in FIG. 2, the UE determines a CQI(TP0) that is a CQI based on the SINR of the TP0, and a CQI(TP1) that is a CQI based on the SINR of the TP1 (in some instances, also a CQI(TP2) that is a CQI based on the SINR of the TP2). Then, the UE collectively feeds back the per-point CQI determined for each TP to the TP0. The TP0 performs scheduling (wireless resource allocation) and MCS selection for the UE based on the per-point CQI of each TP received from the UE.

Non-patent literature 3GPP TR36.814 V9.0.0 (2010-03), and 3GPP TR36.819 V11.0.0 (2011-09) disclose examples of the related art.

SUMMARY

[TECHNICAL PROBLEM]

The per-point CQI corresponds to the reception quality when the TP uses ST. Therefore, scheduling and MCS selection based on the per-point CQI is considered to be relatively conformable to DPS and CS/CB, within CoMP, in which data is transmitted from a single TP. On the other hand, the possibility may be considered that scheduling and MCS selection based on the per-point CQI is not easily conformable to JT in which a plurality of TPs perform joint transmission. Furthermore, as a result of the per-point CQI being used, unsuitable scheduling and MCS selection may be performed when JT is applied, resulting in reduced system throughput. However, in the current 3GPP communication standard, the current state is that details are not prescribed regarding scheduling and MCS selection based on the per-point CQI when JT is applied.

The disclosed technology has been achieved in light of the description above. An object of the disclosed technology is to provide a wireless communication system, a wireless terminal, a wireless base station, and a wireless communication method enabling a wireless base station to appropriately perform scheduling and MCS selection based on per-point CQI when JT is applied.

[SOLUTION TO PROBLEM]

In order to solve the problems described above and accomplish the object, a wireless communication system that is disclosed in the present specification, the wireless communication system includes a wireless base station that performs joint transmission with another wireless base station to transmit same data to a wireless terminal, and the wireless terminal that transmits feedback information to the wireless base station, the feedback information being related to reception quality for each frequency domain based on a channel estimation value for each frequency domain when the wireless base station and the another wireless base station perform the joint transmission.

[ADVANTAGEOUS EFFECTS OF INVENTION]

One embodiment of a wireless communication system, a wireless terminal, and a wireless base station that are disclosed in the present specification, decreases in system throughput by appropriately performing scheduling and MCS selection based on per-point CQI when JT is applied.

BRIEF DESCRIPTION OF DRAWINGS

FIG. 1 illustrates a CQI in LTE.
FIG. 2 illustrates an example of CQI feedback when JT is applied.
FIG. 3 illustrates an example of a network configuration of a wireless communication system according to a first embodiment.
FIG. 4 is a diagram of estimation error in an aggregated CQI.
FIG. 5 illustrates an example of a functional configuration of a wireless terminal in the communication system according to the first embodiment.
FIG. 6 is a diagram of a specific application example of the communication system according to the first embodiment.
FIG. 7 is a diagram of an example of upstream control information in the communication system according to the first embodiment.
FIG. 8 is a diagram of an example of a functional configuration of a wireless base station in the communication system according to the first embodiment.
FIG. 9 is a diagram of an example of a hardware configuration of the wireless terminal in the communication system according to the first embodiment.
FIG. 10 is a diagram of an example of a hardware configuration of the wireless base station in the communication system according to the first embodiment.
FIG. 11 illustrates an example of upstream control information in a communication system according to a second embodiment.
FIG. 12 illustrates an example of a functional configuration of a wireless base station in the communication system according to the second embodiment.
FIG. 13 illustrates an example of upstream control information in a communication system according to a third embodiment.
FIG. 14 illustrates an example of upstream control information in a communication system according to a fourth embodiment.

DESCRIPTION OF EMBODIMENTS

Embodiments of a disclosed wireless communication system, wireless terminal, wireless base station, and wireless communication method will hereinafter be described with reference to the drawings. The embodiments are described as separate embodiments for convenience. However, it goes without saying that combined effects may be achieved by combining the embodiments, and usefulness may be further enhanced.

[a] First embodiment

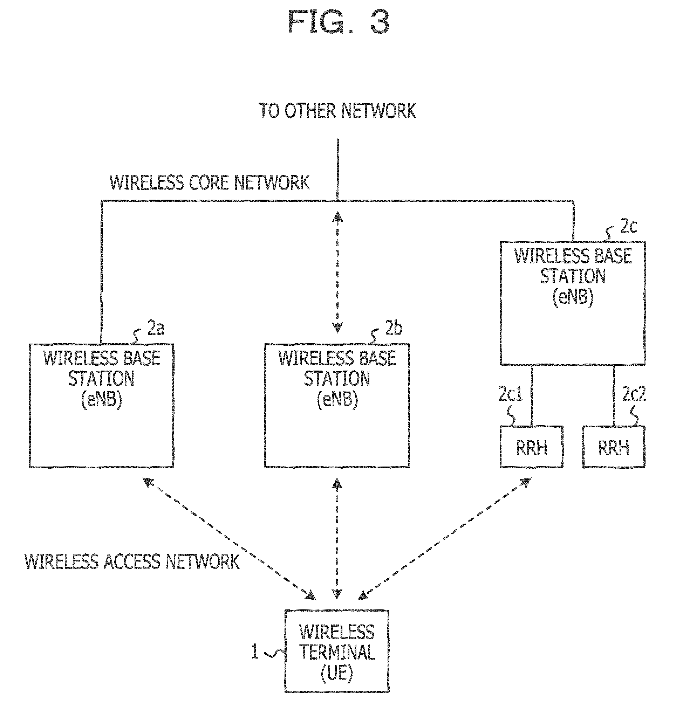

FIG. 3 illustrates a network configuration of a wireless communication system according to a first embodiment.

The present embodiment is an embodiment of a wireless communication system complying with LTE. Therefore, several terms and concepts specific to LTE are presented. However, the present embodiment is merely an example. It is noted that the present embodiment may also be applied to wireless communication systems complying with communication standards other than LTE.

The wireless communication system illustrated in FIG. 3 includes a wireless terminal (user equipment (UE)) 1, wireless base stations (evolved Node Bs (eNBs)) 2a. 2b, and 2c, and the like. A wireless network between the wireless terminal and the wireless base station is referred to as a wireless access network. The wireless base stations are connected to one another by a wired or wireless network referred to as a wireless core network. In addition, a mobility management entity (MME), a system architecture evolution gateway (SAE-GW), and the like (not illustrated) are also connected to the wireless core network. In the description hereafter, the plurality of wireless base stations 2a, 2b, and 2c may be collectively expressed as a wireless base station 2.

The wireless base station 2 may be connected by wire to the wireless core network, as is the wireless base station 2a, or may be connected wirelessly to the wireless core network, as is the wireless base station 2b. In addition, a function for communicating with the wireless access network may be provided by RRH 2c1 and 2c2 which are separate devices. The wireless base station 2 may be connected by wire to the RRH 2c1 and 2c2, as is the wireless base station 2c.

As described above, the wireless base station (including the RRHs) 2 may transmit data to the wireless terminal alone, or may transmit data to the wireless terminal in a coordinated manner by a plurality of wireless base station 2, based on CoMP technology. The wireless base station 2 is capable of transmitting data to the wireless terminal using JT in CoMP technology. The wireless base station 2 may also be capable of transmitting data to the wireless terminal using DPS or CS/CB in CoMP technology.

The wireless communication system in FIG. 3 uses the orthogonal frequency division multiple access (OFDMA) scheme as the wireless access scheme.

An LTE network may be referred to as an evolved packet system (EPS). The EPS includes an evolved universal terrestrial radio network (eUTRAN) which is a wireless access network, and an evolved packet core (EPC) which is a core network. The core network may be referred to as a system architecture evolution (SAE).

Here, first, in preparation for the description related to the first embodiment, problems to be considered in the above-described background art will be reviewed.

In FIG. 2, when JT is applied to the wireless terminal 1, the TP0 has to perform scheduling (wireless resource allocation) for application of JT, for the wireless terminal 1. Here, as described above, the TP0 receives feedback of the per-point CQI of each TP from the wireless terminal 1. Therefore, the TP0 estimates a CQI (referred to as an aggregated CQI) when JT is applied to the wireless terminal 1, based on the received per-point CQI of each TP, and performs scheduling for application of JT based on the estimated CQI.

In other words, when performing scheduling of the wireless terminal 1 when JT is applied, the TP0 has to estimate the aggregated CQI (CQI(TP0+TP1)) based on the per-point CQI (CQI(TP0) and CQI(TP1) in FIG. 2) of each TP. Here, in the 3GPP, an estimation algorithm for the aggregated CQI is not particularly prescribed. Therefore, it is considered that the estimation algorithm for the aggregated CQI is dependent on implementation by each vendor. At this time, the accuracy of the estimation of the aggregated CQI becomes an issue.

When the accuracy of the estimation value of the aggregated CQI is poor (error is significant), the accuracy of scheduling for application of JT is affected. For example, when the estimation value of the aggregated CQI is favorable regardless of the aggregated CQI actually being poor, a sub-band having poor reception quality may be scheduled for the wireless terminal 1. In addition, more sub-bands may be scheduled for a wireless terminal 1 that actually has a lower reception quality than another wireless terminal 1. As a result, transmission efficiency (throughput) of the overall system decreases.

In addition, as described above, the CQI is also used for MCS selection in AMC. Therefore, when the error in the estimation value of the aggregated CQI is significant, there may be a case in which the MCS is not appropriately selected when JT is applied. As a result, transmission efficiency of the system further decreases.

In summary of the foregoing, it is clear that a problem occurs in that system throughput decreases for various reasons when the wireless base station 2 is unable to correctly estimate the aggregated CQI indicating the reception quality on the wireless terminal 1 side when JT is applied.

Next, the description is given to an example of a method by which the wireless base station 2 that has received feedback of the per-point CQIs from the wireless terminal 1 estimates the aggregated CQI based on expressions (1) to (5). Here, the value of the CQI corresponds to the value of the SINR. Therefore, the problem regarding estimation of the CQI may be reduced to a problem regarding estimation of the SINR. Therefore, hereafter, the description is given to an example of a method for estimating the SINR for the TP0 and the TP1 that are coordinating (corresponding to the aggregated CQI), based on the SINR for each of the TP0 and the TP1 (corresponding to the per-point CQIs).

In the example, a case in which two TPs (TP0 and TP1), such as those in FIG. 2, coordinate is considered. However, a similar discussion may be applied to a case in which three or more TPs coordinate. In addition, the CQI is defined in sub-band units to enable fine scheduling.

First, SINR(TP0+TP1), which is the SINR for the TP0 and the TP1 that are coordinating, is provided by a following expression (1). Here, $H_0$, $H_1$, and $H_2$ are transfer functions of each link taking into consideration transmission power of the TP (the size of the transmission power reflected in amplitude), and $\sigma^2$ is a dispersion of thermal noise.

$$SINR(TP0+TP1)=|H_0+H_1|^2/(|H_2|^2+\sigma^2)...(1)$$

Expression (1) will be described. The definition of SINR is the ratio of desired signal power to the sum of interference signal power and noise power. When JT by the TP0 and the TP1 is applied, the wireless signal transmitted by the TP2 is an interference signal. Therefore, the denominator in expression (1) is the sum of $|H_2|^2$ expressing reception power of the interference signal and $\sigma^2$ expressing thermal noise power. In addition, when JT by the TP0 and the TP1 is applied, a wireless signal that is the same data signals respectively transmitted by the TP0 and the TP1 and combined in air is the desired signal. Therefore, the numerator in expression (1) is $|H_0+H_1|^2$ which is the reception power based on $H_0+H_1$ which is in-phase addition of $H_0$ and $H_1$.

Next, SINR(TP0) and SINR(TP1), which are SINRs respectively for the TP0 and the TP1, are respectively provided by the following expressions (2) and (3).

$$SINR(TP0)=|H_0|^2/(|H_1|^2+|H_2|^2+\sigma^2)...(2)$$

$$SINR(TP1)=|H_1|^2/(|H_0|^2+|H_2|^2+\sigma^2)...(3)$$

Expression (2) will be described. When ST by the TP0 is applied, the wireless signal transmitted from the TP1 and the wireless signal transmitted from the TP2 are both interference signals. Therefore, the denominator in expression (2) is the sum of $|H_1|^2$ and $|H_2|^2$ expressing reception power of the interference signals and $\sigma^2$ expressing thermal noise power. The two interference signals are based on independent data signals. Therefore, when determining the reception power of the interference signals, the scalar sum of the reception power based on each interference signal is derived without taking into consideration combination in air. In addition, when ST by the TP0 is applied, the wireless signal transmitted from the TP0 is the desired signal. Therefore, the denominator in expression (2) is $|H_0|^2$. The description of expression (3) is similar to that of expression (2) and is therefore omitted.

Here, expression (1) may be modified as follows using expressions (2) and (3) under several premises.

$$SINR(TP0+TP1)=|H_0+H_1|^2/(|H_2|^2+\sigma^2)...(1)$$

$$\approx(|H_0|^2+|H_1|^2)/(|H_2|^2+\sigma^2)...(4)$$

$$\approx(|H_1|^2+|H_2|^2)\cdot SINR(TP0)/|H_2|^2+(|H_0|^2+|H_2|^2)\cdot SINR(TP1)/|H_2|^2...(5)$$

$$\approx(RSRP(TP1)+RSRP(TP2))\cdot SINR(TP0)/RSRP(TP2)+(RSRP(TP0)+RSRP(TP2))\cdot SINR(TP1)/RSRP(TP2)...(6)$$

First, under a predetermined condition (described hereafter), the equation $|H_0+H_1|^2=|H_0|^2+|H^1|$ is established. When this equation is substituted for the right side in (1), expression (4) is obtained. Next, under a premise that the thermal noise is small enough to be ignored in comparison with the signal power, $\sigma^2=0$ in expression (4). Furthermore, when expression (4) is modified using (1) and (2), expression (5) is obtained.

Furthermore, $|H_0|^2$, $|H_1|^2$, and $|H_2|^2$ in expression (5) are respectively approximated by RSRP(TP1), RSRP(TP2), and RSRP(TP3). Here, RSRP(TP1), RSRP(TP2), and RSRP(TP3) are respectively reference signal reception powers of the TP0, the TP1, and the TP2. The reference signal reception power is an indicator used for determination of a handover execution, and is notified from the wireless terminal 1 to the TP0 when a predetermined condition is met. Therefore, the TP0 is able to perform approximation calculation from expression (4) to expression (5) without receiving feedback of new information. Furthermore, as described above, $H_0$, $H_1$, and $H_2$ are transfer functions in which the size of the transmission power is reflected in amplitude. Therefore, it is thought that the approximation from expression (4) to expression (5) is highly valid. However, because the CQI is ordinarily defined for each sub-band, the SINR which is the indicator serving as the source for the CQI is preferably also calculated for each sub-band. However, the concept of calculation per sub-band does not apply to RSRP, and RSRP is an average value of all sub-bands. Therefore, in the approximation from expression (4) to expression (5), the element of per sub-band is reduced (although not completely lost because SINR is a value per sub-band). It is thought that approximation accuracy may not be expected.

Furthermore, a significant problem is present in approximation from expression (1) to expression (4), as well. $|H_0+H_1|^2=|H_0|^2+|H_0|^2$ is established only when the phase difference between $H_0$ and $H_1$ is zero (dot product is zero). However, in general, channel phases differ as a result of delay time in multipaths from each TP and carrier delay differences among TPs. Therefore, the phase difference between $H_0$ and $H_1$ is generally not zero. However, the TP0 is unable to known the channel phase differences among the TPs from the per-point CQI of each TP fed back from the wireless terminal 1.

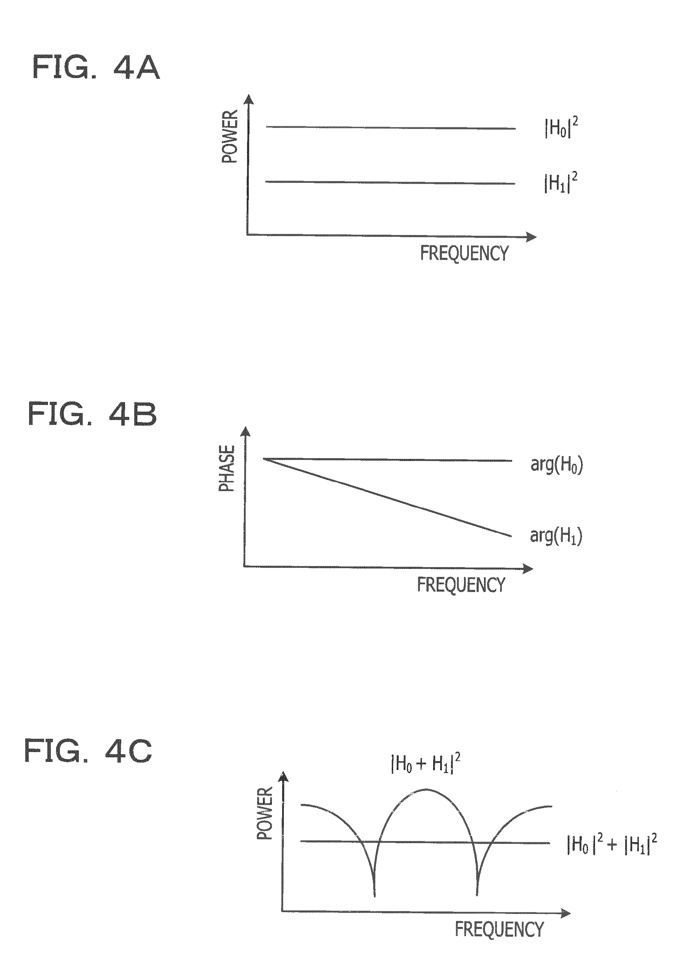

This problem will be described with reference to FIG. 4. An example of the frequency characteristics of the channel powers of the TP0 and the TP1 is illustrated in FIG. 4(A). In addition, the frequency characteristics of the channel phases are illustrated in FIG. 4(B). In this instance, as illustrated in FIG. 4(C), the frequency characteristics diverge between the denominator $|H_0+H_1|^2$ in expression (1) and the denominator $|H_0|^2+|H_1|^2$ in expression (4). A reason for this is that the reception power of the actual desired signal reflects the effects of signals from the TPs strengthening one another and weakening one another because of the channel phase differences among the TPs. However, when estimation is performed using the per-point CQIs, the above-described effect is not reflected because phase difference is not considered when the channel characteristics from the TPs are added in the dimension of power. Therefore, when phase difference is present between $H_0$ and $H_1$, the reception power of the desired signal may be erroneously estimated when JT is applied.

In summary of the above-described description based on expressions (1) to (5), if an attempt is made to estimate the SINR for a plurality of TPs that are coordinating (corresponding to the aggregated CQI) based on the SINR for each TP (corresponding to the per-point CQI), it is clear that reduced accuracy is unavoidable because low-accuracy approximation has to be repeated. Therefore, the estimation value of the aggregated CQI determined based on the per-point CQIs by the wireless base station 2 is unavoidably low in accuracy.

Meanwhile, as described above, when the wireless base station 2 is unable to correctly estimate the aggregated CQI, which is the reception quality on the wireless terminal 1 side when JT is applied, scheduling and MCS selection become inappropriate and system throughput may decrease. Therefore, as a conclusion derived from the background art, a problem is derived in that, when the wireless base station 2 performs scheduling for application of JT based on the per-point CQI of each TP, reduced system throughput becomes unavoidable. The disclosed technology aims to solve this problem.

Such problem is unique to application of JT within CoMP, and is not a problem when DPS and CS/CB, within CoMP, are applied. In DPS and CS/CB, a single cell transmits data to a certain wireless terminal 1. Therefore, aggregated CQI is not desired in the first place. In other words, the connected cell is able to perform scheduling and MCS selection for application of DPS or CS/CB using the per-point CQI of each cell fed back from the wireless terminal 1, as is. The above-described problem occurs only when JT is applied because estimation of the aggregated CQI from the per-point CQIs is desired.

To solve the above-described problem, in the wireless communication system according to the first embodiment, the wireless terminal 1 determines the per-point CQIs and the aggregated CQI, and collectively feeds back the per-point CQIs and the aggregated CQI to the TP. As a result, the TP is able to acquire a highly accurate aggregated CQI when JT is applied. Then, the TP is able to perform scheduling and MCS determination appropriate for the wireless terminal 1 when JT is applied, based on the feedback aggregated CQI. As a result, unlike the past, inappropriate scheduling and MCS determination caused by the TP estimating the aggregated CQI no longer occurs. Therefore, in the communication system according to the first embodiment, decrease in system throughput accompanying inappropriate scheduling and MCS determination is able to be suppressed.

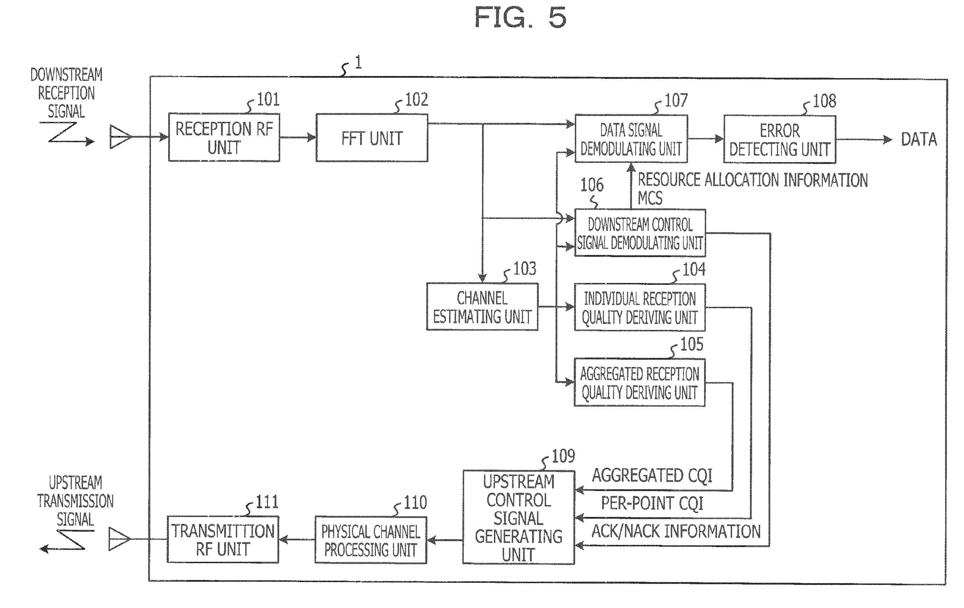

An example of the functional configuration of each device in the wireless communication system according to the first embodiment will hereinafter be described with reference to FIGs. 5 to 8.

FIG. 5 illustrates an example of the functional configuration of the wireless terminal 1 according to the first embodiment. The wireless terminal 1 includes, for example, a reception radio frequency (RF) unit 101, a fast Fourier transform (FFT) unit 102, a channel estimating unit 103, an individual reception quality deriving unit 104, an aggregated reception quality deriving unit 105, a downstream control signal demodulating unit 106, a data signal demodulating unit 107, an error detecting unit 108, an upstream control signal generating unit 109, a physical channel processing unit 110, and a transmission RF unit 111.

The reception RF unit 101 receives a downstream wireless signal from the TP and converts the received wireless signal to a digital signal (time domain). Specifically, the reception RF unit 101 converts the received wireless signal to a baseband signal (electrical signal) and then performs quadrature demodulation, and analog/digital (A/D) conversion.

The FFT unit 102 converts the time-domain digital signal to a frequency-domain digital signal. Specifically, the FFT unit 102 detects an extraction timing and removes a cyclic prefix (CP) from the time-domain digital signal, and then performs a FFT process based on the detected extraction timing.

The channel estimating unit 103 determines a channel estimation value (above-described $H_0$, $H_1$, $H_2$, and the like) for each TP based on the post-FFT reception signal (frequency-domain digital signal). Specifically, the channel estimating unit 103 extracts a reference signal (RS) for each TP from the post-FFT reception signal (frequency-domain digital signal). Then, the channel estimating unit 103 determines a cross-correlation between the extracted reference signal and the reference signal of each TP that is already known, thereby determining the channel estimation value of the wireless channel expressed by a complex number for each TP.

The individual reception quality deriving unit 104 determines the per-point CQI which is the individual reception quality of each TP, based on the channel estimation value of each TP determined by the channel estimating unit 103. Specifically, first, the individual reception quality deriving unit 104 determines the SINR for application of ST of each TP using, for example, the above-described expressions (2) and (3), based on the channel estimation value of each TP determined by the channel estimating unit 103. As the thermal noise dispersion $\sigma^2$ in expressions (2) and (3), a separately calculated value may be used. Alternatively, the thermal noise dispersion $\sigma^2$ may be approximated by zero approximation or a predetermined value. The individual reception quality deriving unit 104 then determines the per-point CQI of each TP using a SINR and CQI conversion table, based on the determined SINR for application of ST of each TP. Here, the individual reception quality deriving unit 104 determines the per-point CQI of each TP for each sub-band. In other words, the per-point CQI of a certain TP includes CQIs for several sub-bands, and each CQI is associated with a sub-band. The per-point CQI is a piece of upstream control information transmitted by an upstream control signal.

A set of TPs for which the per-point CQIs are determined by the individual reception quality deriving unit 104 is referred to as a CoMP coordination set. The TP0 gives notification of the CoMP coordination set in advance. As a result, the individual reception quality deriving unit 104 of the wireless terminal 1 is able to know the TPs for which the individual reception quality deriving unit 104 is to be determined.

The aggregated reception quality deriving unit 105 determines an aggregated CQI, which is an aggregated reception quality when the TPs perform joint transmission (aggregated reception quality), based on the channel estimation value of each TP determined by the channel estimating unit 103. Specifically, first, the aggregated reception quality deriving unit 105 determines the SINR for application of JT of each TP using, for example, the above-described expression (1), based on the channel estimation value of each TP determined by the channel estimating unit 103. As the thermal noise dispersion $\sigma^2$ in expression (1), a separately calculated value may be used. Alternatively, the thermal noise dispersion $\sigma^2$ may be approximated by zero approximation or a predetermined value. The aggregated reception quality deriving unit 105 then determines the aggregated CQI of each TP using the SINR and CQI conversion table, based on the determined SINR for application of JT of each TP. Here, the aggregated reception quality deriving unit 105 determines the aggregated CQI of each TP for each sub-band. In other words, the aggregated CQI of a certain TP includes CQIs for several sub-bands, and each CQI is associated with a sub-band. The aggregated CQI is a piece of upstream control information transmitted by the upstream control signal.

A group of TPs for which the aggregated CQI is determined by the aggregated reception quality deriving unit 105 is also determined based on the above-described CoMP coordination set. For example, five TPs are included in a CoMP coordination set. At this time, for example, the aggregation reception quality deriving unit 105 may determine the aggregated CQI for only combinations of TP pairs within the CoMP coordination set (ten combinations). Alternatively, the aggregated reception quality deriving unit 105 may determine the aggregated CQI for all combinations in which two or more TPs within the CoMP coordination set coordinate (26 combinations).

The downstream control signal demodulating unit 106 reconstructs downstream control information, such as resource allocation information (scheduling information) and the MCS, transmitted from the wireless base station 2, from the post-FFT reception signal (frequency-domain digital signal). Specifically, the downstream control signal demodulating unit 106 extracts the downstream control signal from the post-FFT reception signal. Then, the downstream control signal demodulating unit 106 performs channel compensation on the extracted downstream control signal using the channel estimation value determined by the channel estimating unit 103. The downstream control signal demodulating unit 106 subsequently performs data demodulation and error correction decoding, and reconstructs the downstream control information.

The data signal demodulating unit 107 reconstructs data information from the post-FFT reception signal (frequency-domain digital signal). Specifically, the data signal demodulating unit 107 extracts the data signal from the post-FFT reception signal based on the resource allocation information determined by the downstream control signal demodulating unit 106. Then, the data signal demodulating unit 107 performs channel compensation on the extracted data signal using the channel estimation value determined by the channel estimating unit 103. The data signal demodulating unit 107 subsequently performs data demodulation and error correction decoding based on the MCS determined by the downstream control signal demodulating unit 106, and reconstructs the data information.

The error detecting unit 108 detects a bit error in the data information by inspecting a cyclic redundancy check (CRC) bit that has been added to the data information. Then, the error detecting unit 108 outputs acknowledgement (ACK) information indicating successful data reception when a bit error is not detected. On the other hand, the error detecting unit 108 outputs negative acknowledgement (NACK) information indicating data reception failure when a bit error is detected. The ACK information and the NACK information are pieces of upstream control information transmitted by the upstream control signal.

The upstream control signal generating unit 109 generates the upstream control signal (digital signal) corresponding to the upstream control information. Specifically, the upstream control signal generating unit 109 performs coding, data modulation, and the like on the various pieces of upstream control information generated by the upstream control signal generating unit 109, and generates the upstream control signal.

Here, the upstream control signal generating unit 109 according to the first embodiment generates an upstream control signal including at least the per-point CQIs and the aggregated CQIs. The upstream control information generated by the upstream control signal generating unit 109 according to the first embodiment may include other arbitrary pieces of upstream control information. For example, the upstream control information generated by the upstream control signal generating unit 109 according to the first embodiment may include the ACK information or the NACK information.

The physical channel processing unit 110 converts the digital signal to a transmission signal. Specifically, the physical channel processing unit performs digital Fourier transform (DFT), scrambling code (SC) mapping, IFFT, and CP insertion in sequence on the digital signal including the upstream control signal and other signals (such as the data signal) and obtains the transmission signal.

Finally, the transmission RF unit 111 transmits the wireless signal including the upstream control signal to the wireless base station 2. Specifically, the transmission RF unit 111 performs D/A conversion, quadrature modulation, and the like on the transmission signal including the upstream control signal and other signals (such as the data signal) and obtains a baseband signal. The transmission RF unit 111 then converts the baseband signal to the wireless signal and transmits the wireless signal to the wireless base station 2.

Here, the transmission RF unit 111 of the wireless terminal 1 according to the first embodiment transmits a wireless signal including the upstream control signal that includes at least the per-point CQIs and the aggregated CQIs to the wireless base station 2. The wireless signals transmitted by the transmission RF unit 111 of the wireless terminal 1 according to the first embodiment may include other arbitrary upstream control signals and data signals. For example, the wireless signal transmitted by the transmission RF unit 111 of the wireless terminal 1 according to the first embodiment may include an ACK signal corresponding to the ACK information or a NACK signal corresponding to the NACK information.

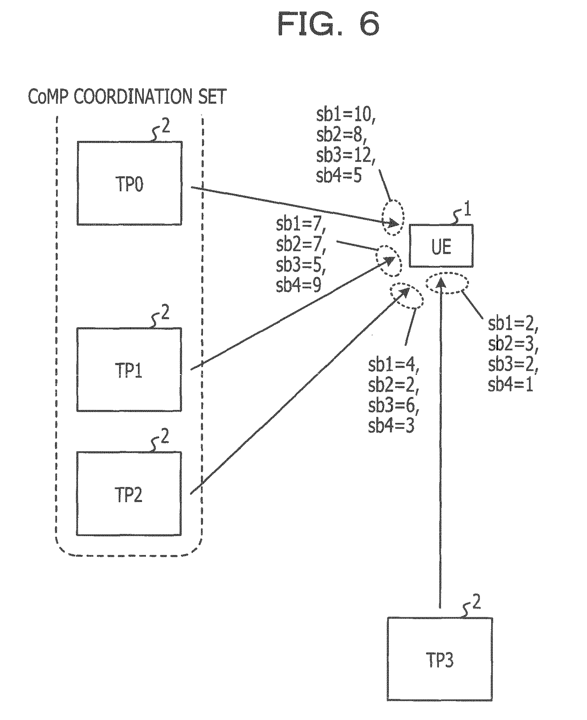

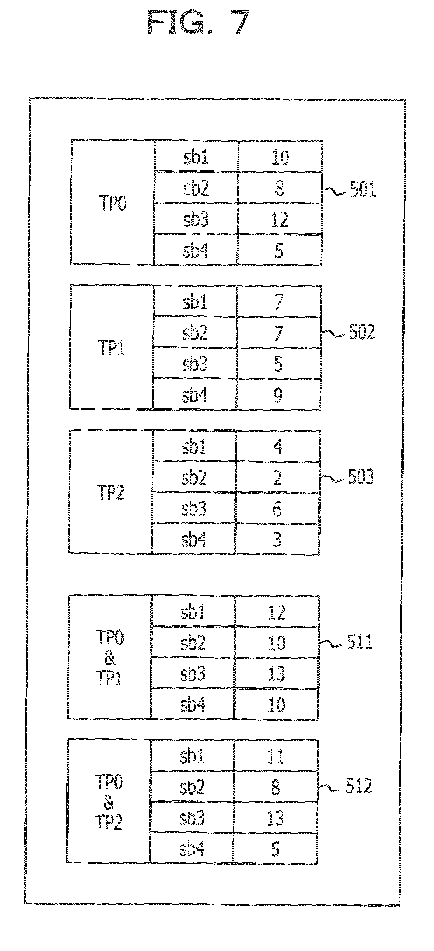

Next, the upstream control signal according to the first embodiment will be described with reference to FIGs. 6 and 7.

FIG. 6 is a diagram of a specific application example according to the first embodiment. In the application example, four TPs, TP0 to TP3, are present. In FIG. 6, for example, it is indicated that the reception quality at the wireless terminal 1 in relation to the TYP0 is equivalent to CQI=10 in a sub-band sb1, equivalent to CQI=8 in a sub-band sb2, equivalent to CQI=12 in a sub-band sb3, and equivalent to CQI=5 in a sub-band sb4.

In the application example in FIG. 6, among the four TPs, three TPs, TP0 to TP2, are the above-described CoMP coordination set. The wireless terminal 1 determines the per-point CQIs for only the TP0 to TP2 that are included in the CoMP coordination set. The wireless terminal 1 does not determine the per-point CQI for the TP3 that is not included in the CoMP coordination set.

In addition, in the application example in FIG. 6, the wireless terminal 1 takes into consideration only JT that includes the TP0 which is the connection cell and in which two TPs coordinate. In other words, in the application example in FIG. 6, the wireless terminal 1 determines two types of aggregated CQIs, one for JT in which the TP0 and the TP1 coordinate, and one for JT in which the TP0 and the TP2 coordinate.

FIG. 7 illustrates an example of the upstream control signal according to the first embodiment. The upstream control signal in FIG. 7 corresponds to the specific application example in FIG. 6. The upstream control signal in FIG. 7 includes the per-point CQIs and the aggregated CQIs. In FIG. 7, reference numerals 501, 502, and 503 indicate the per-point CQIs. In FIG. 7, reference numerals 511 and 512 indicate the aggregated CQIs.

In FIG. 7, each per-point CQI is composed of CQIs for several sub-bands (four in this example). Each CQI is associated with a sub-band. The number of per-point CQIs amounts to the number of TPs included in the CoMP coordination set (three in this example). Each per-point CQI is the individual reception quality at the wireless terminal 1 when ST is applied to each TP included in the CoMP coordination set, determined for each sub-band.

In addition, in FIG. 7, each aggregated CQI is composed of CQIs for several sub-bands (four in this example). Each CQI is associated with a sub-band. The number of aggregated CQIs amounts to the number of combinations for JT among the TPs included in the CoMP coordination set (two in this example). Each aggregated CQI is the aggregated reception quality at the wireless terminal 1 when JT is applied to each combination of TPs included in the CoMP coordination set, determined for each sub-band.

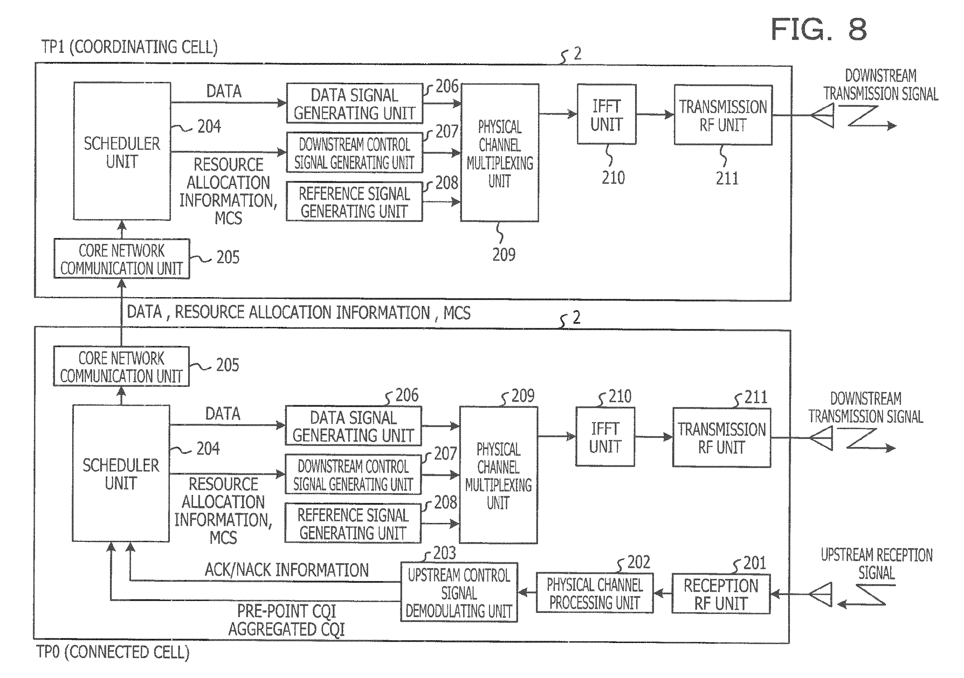

FIG. 8 illustrates an example of a functional configuration of the TP (wireless base station 2) according to the first embodiment. In FIG. 8, the TP0 that is a connected cell and the TP1 that is a coordinating cell are illustrated. However, the TP0 and the TP1 are collectively described hereafter as TP.

The TP includes, for example, a reception RF unit 201, a physical channel processing unit 202, an upstream control signal demodulating unit 203, a scheduler unit 204, a core network communication unit 205, a data signal generating unit 206, a downstream control signal generating unit 207, a reference signal generating unit 208, a physical channel multiplexing unit, an inverse fast Fourier transform (IFFT) unit 210, and a transmission RF unit 211.

The reception RF unit 201 receives an upstream wireless signal from the wireless terminal 1 and converts the received wireless signal to a digital signal (time-domain). Specifically, the reception RF unit 201 converts the received wireless signal to a baseband signal (electrical signal) and then performs quadrature demodulation and analog/digital (A/D) conversion.

Here, the reception RF unit 201 of the TP according to the first embodiment receives a wireless signal including the upstream control signal including at least the per-point CQIs and the aggregated CQIs from the wireless terminal 1. The wireless signal received by the reception RF unit 201 of the TP according to the first embodiment may include other arbitrary upstream control signals and data signals. For example, the wireless signal received by the reception RF unit 201 of the TP according to the first embodiment may include the ACK signal corresponding to the ACK information or the NACK signal corresponding to the NACK information.

The physical channel processing unit 202 converts a reception signal to a digital signal. Specifically, the physical channel processing unit 202 performs CP removal, FFT, scrambling code (SC) demapping, inverse digital Fourier transform (IDFT) in sequence on the reception signal and obtains the digital signal.

The upstream control signal demodulating unit 203 reconstructs the upstream control information transmitted from the wireless terminal 1 from the digital signal. Specifically, the upstream control signal demodulating unit 203 extracts the upstream control signal from the digital signal. Then, the upstream control signal demodulating unit 203 performs data demodulation and error correction decoding on the extracted upstream control signal and recovers the upstream control information.

Here, the upstream control signal demodulating unit 203 according to the first embodiment reconstructs upstream control information including at least the per-point CQIs and the aggregated CQIs. The upstream control information reconstructed by the upstream control signal demodulating unit 203 according to the first embodiment may include other arbitrary upstream control information. For example, the upstream control information generated by the upstream control signal demodulating unit 203 according to the first embodiment may include the ACK information and the NACK information.

The scheduler unit 204 performs scheduling (wireless resource allocation, MCS selection, and the like) for the wireless terminal 1 based on the per-point CQIs and the aggregated CQIs reconstructed by the upstream control signal demodulating unit 203. According to the first embodiment, an example using a proportional fairness (PF) algorithm as a scheduling algorithm is described. However, a maximum carrier to interference power ratio (CIR) algorithm, a round robin algorithm, and other arbitrary algorithms may be used as the scheduling algorithm.

A process by the scheduler unit 204 will be described. The scheduler unit 204 selects the MCS using a conversion table from CQI to MCS, such as that illustrated in FIG. 1, based on the per-point CQIs and the aggregated CQIs reconstructed by the upstream control signal demodulating unit 203. The scheduler unit 204 determines the MCS from the aggregated CQIs when JT is performed and the MCS from the per-point CQIs when ST is performed.

The scheduler unit 204 calculates an expected instantaneous throughput for both when ST is performed and when JT is performed by each TP to the wireless terminal 1, based on the determined MCSs. Next, the scheduler unit 204 calculates a PF metric of the wireless terminal 1 from (PF metric)=(expected instantaneous throughput)/(current average throughput). Then, the scheduler unit 204 compares the PF metric value of each wireless terminal 1 for each sub-band, and assigns the sub-band to the wireless terminal 1 having the highest PF metric value. At this time, the scheduler unit 204 determines whether to apply JT or ST to the wireless terminal 1 based on the PF metric. When making the determination, the scheduler unit 204 may select ST or JT so that cell throughput increases.

In addition, when application of JT is determined for a certain wireless terminal 1, the scheduler unit 204 outputs a destination UE identifier, data, the resource allocation information, the MCS, and the like to the core network communication unit 205 to notify the coordinating TP of these pieces of information. When the scheduler unit 204 of a coordinating TP receives the notification over the core network, the TP0 and the coordinating TP share the destination UE identifier, data, resource allocation information, and MCS. Then, the TP0 and the coordinating TP are able to transmit the same data to the wireless terminal 1 using the same resources and MCS to the wireless terminal 1.

Returning to FIG. 8, the core network communication unit 205 performs wired or wireless communication with another device connected to the core network. As described above, the core network communication unit 205 notifies coordinating TP of the destination UE identifier, data, resource allocation information, MCS, and the like.

The data signal generating unit 206 receives data information to be transmitted to the wireless terminal 1 from the scheduler unit 204, and generates a data signal based on the data information. Specifically, the downstream control signal generating unit 207 receives the data information to be transmitted to the wireless terminal 1 from the scheduler unit 204. The data may be transmitted to the wireless terminal 1 using ST or may be transmitted to the wireless terminal 1 using JT. In the latter case, transmission may be performed as a connected cell (scheduling cell) or as a coordinating cell. The data signal generating unit 206 then adds a CRC bit for error detection, performs error correction coding, data modulation, and the like on the received data information and generates the data signal.

The downstream control signal generating unit 207 receives downstream control information and generates a downstream control signal based on the downstream control information. Specifically, the downstream control signal generating unit 207 receives the downstream control information, such as the resource allocation information and MCS, from the scheduler unit 204. In addition, the downstream control signal generating unit 207 may receive other pieces of downstream control information. Then, the downstream control signal unit performs error correction coding, data modulation, and the like on the received downstream control information, and generates the downstream control signal.

The reference signal generating unit 208 generates the reference signal used for channel estimation by the wireless terminal 1. The reference signal generating unit 208 generates the reference signal so as to differ between adjacent TPs.

The physical channel multiplexing unit 209 performs frequency multiplexing on each physical channel. The physical channel multiplexing unit 209 performs frequency multiplexing on the physical downlink shared channel (PDSCH) that is a physical channel for transmitting the downstream data signal, a physical downlink control channel (PDCCH) that is a physical channel for transmitting the downlink control signal, and other physical channels, thereby obtaining a frequency-domain digital signal.

The IFFT unit 210 converts the frequency-domain digital signal to a time-domain digital signal. Specifically, the IFFT unit 210 performs an IFFT process on the frequency-domain digital signal including the downstream control signal and other signals (such as the data signal). Then, the IFFT unit 210 adds a CP to the IFFT-processed signal and obtains the time-domain digital signal.

Finally, the transmission RF unit 211 transmits the wireless signal including the downstream control signal and other signals (such as the data signal and reference signal) to the wireless terminal 1. Specifically, the transmission RF unit 211 performs D/A conversion, quadrature modulation, and the like on the time-domain digital signal including the downstream control signal and other signals (such as the data signal and reference signal), and obtains a baseband signal. The transmission RF unit 211 then converts the baseband signal to a wireless signal and transmits the wireless signal to the wireless terminal 1.

In addition, in the TP1 of the coordinating cell, the core network communication unit 205 receives notification of the destination UE identifier, data, resource allocation information, MCS, and the like from the TP0. As a result, the TP0 and the TP1 share the destination UE identifier, data, resource allocation information, and MCS. Then, the TP0 and the TP1 transmit the same data to the wireless terminal 1 using the same resources and MCS to the wireless terminal 1.

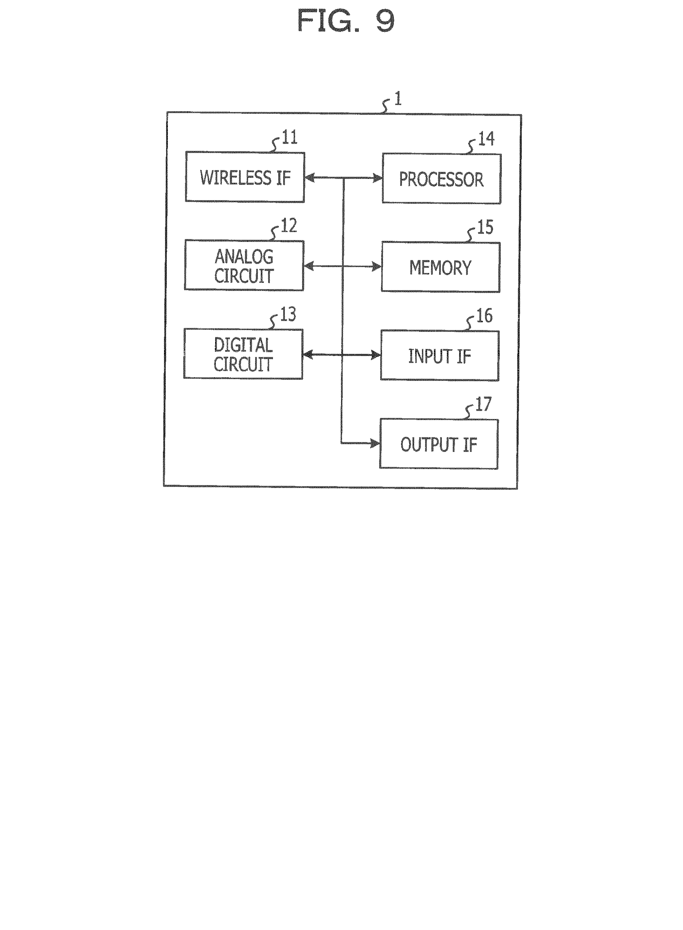

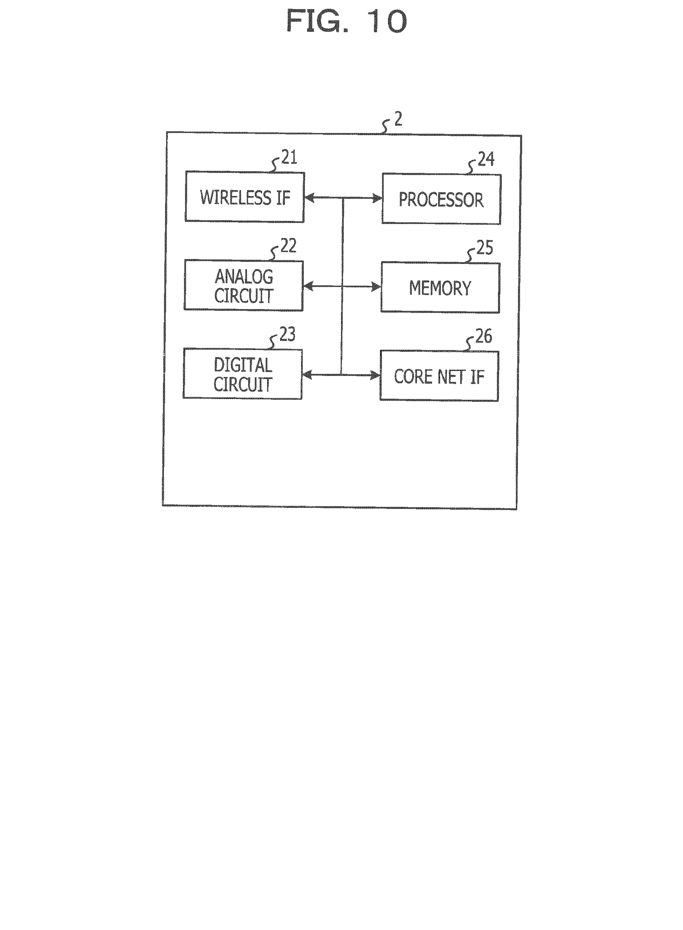

Next, the hardware configurations of each device in the wireless communication system according to the present embodiment will be described with reference to FIGs. 9 and 10.

FIG. 9 describes an example of a hardware configuration of the wireless terminal 1 according to the present embodiment. Each function of the above-described wireless terminal 1 is actualized by some or all of the following hardware components. The wireless terminal 1 according to the above-described embodiment includes a wireless interface (IF) 11, an analog circuit 12, a digital circuit 13, a processor 14, a memory 15, an input IF 16, an output IF 17, and the like.

The wireless IF 11 is an interface device for performing wireless communication with the wireless base station 2 and is, for example, an antenna. The analog circuit 12 is a circuit that processes analog signals and is largely divided into a circuit that performs a reception process, a circuit that performs a transmission process, and a circuit that performs other processes. As the analog circuit that performs the reception process, for example, a low noise amplifier (LNA), a band pass filter (BPF), a mixer, a low pass filter (LPF), an automatic gain controller (AGC), an analog-to-digital converter (ADC), and a phase locked loop (PLL) are included. As the analog circuit that performs the transmission process, for example, a power amplifier (PA), a BPF, a mixer, an LPF, a digital-to-analog converter (DAC), and a PLL are included. As the analog circuit that performs other processes, a duplexer and the like are included. The digital circuit 13 is a circuit that processes digital signals and includes, for example, a large scale integration (LSI), a field-programming gate array (FPGA), and an application specific integrated circuit (ASIC). The processor 14 is a device that processes data and includes, for example, a central processing unit (CPU) and a desital signal processor (DSP). The memory 15 is a device that stores data therein and includes, for example, a read only memory (ROM) and a random access memory (RAM). The input IF 16 is a device for performing input and includes, for example, an operating button and a microphone. The output IF 17 is a device for performing output and includes, for example, a display and a speaker.

Correlations between the functional configuration and the hardware configuration of the wireless terminal 1 will be described. The reception RF unit 101 is actualized by, for example, the wireless IF 11 and the analog circuit 12 (for performing the reception process). In other words, the wireless IF 11 receives the downlink wireless signal from the TP, and the analog circuit 12 converts the received wireless signal to a digital signal (time domain).

The FFT unit 102 is actualized by, for example, the processor 14, the memory 15, and the digital circuit 13. In other words, the processor 14 controls the memory 15 as occasion calls, cooperates with the digital circuit 13 as occasion calls, and converts the time-domain digital signal to a frequency-domain digital signal. In addition, the digital circuit 13 may convert the time-domain digital signal to a frequency-domain digital signal. The channel estimating unit 103 is actualized by, for example, the processor 14, the memory 15, and the digital circuit 13. In other words, the processor 14 controls the memory 15 as occasion calls, cooperates with the digital circuit 13 as occasion calls, and determines the channel estimation value for each TP based on the post-FFT reception signal (frequency-domain digital signal). In addition, the digital circuit 13 may determine the channel estimation value for each TP based on the post-FFT reception signal.

The individual reception quality deriving unit 104 is actualized by, for example, the processor 14, the memory 15, and the digital circuit 13. In other words, the processor 14 controls the memory 15 as occasion calls, cooperates with the digital circuit 13 as occasion calls, and determines the per-point CQI for each TP based on the channel estimation value of each TP determined by the channel estimating unit 103. In addition, the digital circuit 13 may determine the per-point CQI for each TP based on the channel estimation value of each TP determined by the channel estimating unit 103. The aggregated reception quality deriving unit 105 is actualized by, for example, the processor 14, the memory 15, and the digital circuit 13. In other words, the processor 14 controls the memory 15 as occasion calls, cooperates with the digital circuit 13 as occasion calls, and based on the channel estimation value of each TP determined by the channel estimating unit 103, the processor 14 determines the aggregated CQI when the TPs perform joint transmission. In addition, based on the channel estimation value of each TP determined by the channel estimating unit 103, the digital circuit 13 may determine the aggregated CQI when the TPs perform joint transmission.

The downstream control signal demodulating unit 106 is actualized by, for example, the processor 14, the memory 15, and the digital circuit 13. In other words, the processor 14 controls the memory 15 as occasion calls, cooperates with the digital circuit 13 as occasion calls, and reconstructs the downstream control information, such as the resource allocation information (scheduling information) and the MCS, transmitted from the wireless base station 2 from the post-FFT reception signal (frequency-domain digital signal). In addition, the digital circuit 13 may reconstruct the downstream control information, such as the resource allocation information and the MCS, transmitted from the wireless base station 2 from the post-FFT reception signal. The data signal demodulating unit 107 is actualized by, for example, the processor 14, the memory 15, and the digital circuit 13. In other words, the processor 14 controls the memory 15 as occasion calls, cooperates with the digital circuit 13 as occasion calls, and reconstructs the data information from the post-FFT reception signal (frequency-domain digital signal). In addition, the digital circuit 13 may reconstruct the data information from the post-FFT reception signal (frequency-domain digital signal).

The error detecting unit 108 is actualized by, for example, the processor 14, the memory 15, and the digital circuit 13. In other words, the processor 14 controls the memory 15 as occasion calls, cooperates with the digital circuit 13 as occasion calls, and detects a bit error in the data information by inspecting the CRC bit added to the data information. In addition, the digital circuit 13 may detect a bit error in the data information by inspecting the CRC bit added to the data information. The upstream control signal generating unit 109 is actualized by, for example, the processor 14, the memory 15, and the digital circuit 13. In other words, the processor 14 controls the memory 15 as occasion calls, cooperates with the digital circuit 13 as occasion calls, and generates the control signal (digital signal) corresponding to the upstream control information. In addition, the digital circuit 13 may generate the control signal (digital signal) corresponding to the upstream control information.

The physical channel processing unit 110 is actualized by, for example, the processor 14, the memory 15, and the digital circuit 13. In other words, the processor 14 controls the memory 15 as occasion calls, cooperates with the digital circuit 13 as occasion calls, and converts the digital signal to a transmission signal. In addition, the digital circuit 13 may convert the digital signal to a transmission signal. The transmission RF unit 111 is actualized by, for example, the wireless IF 11 and the analog circuit 12 (for the transmission process). In other words, the analog circuit 12 generates the upstream wireless signal including the upstream control signal, and the wireless IF 11 transmits the generated upstream wireless signal to the wireless base station 2.

FIG. 10 describes an example of a hardware configuration of the wireless base station 2 according to the present embodiment. Each function of the above-described wireless base station 2 is actualized by some or all of the following hardware components. The wireless base station 2 according to the above-described embodiment includes a wireless IF 21, an analog circuit 22, a digital circuit 23, a processor 24, a memory 25, a core network IF 26, and the like.

The wireless IF 21 is an interface device for performing wireless communication with the wireless terminal 1 and is, for example, an antenna. The analog circuit 22 is a circuit that processes analog signals and is largely divided into a circuit that performs a reception process, a circuit that performs a transmission process, and a circuit that performs other processes. As the analog circuit that performs the reception process, for example, an LNA, a BPF, a mixer, an LPF, an AGC, an ADC, and a PLL are included. As the analog circuit that performs the transmission process, for example, a PA, a BPF, a mixer, an LPF, a DAC, and a PLL are included. As the analog circuit that performs other processes, a duplexer and the like are included. The digital circuit 23 includes, for example, an LSI, an FPGA, and an ASIC. The processor 24 is a device that processes data and includes, for example, a CPU and a DSP. The memory 25 is a device that stores data therein and includes, for example, a ROM and a RAM. The core network IF 26 is an interface device for performing wired communication or wireless communication with a network-side device including another base station 2, over a wired line or a wireless line connected to a core network (also referred to as a backhaul network) of a mobile phone system.

Correlations between the functional configuration and the hardware configuration of the wireless base station 2 will be described. The reception RF unit 201 is actualized by, for example, the wireless IF 21 and the analog circuit 22 (for the reception process). In other words, the wireless IF 21 receives the upstream wireless signal from the wireless terminal 1, and the analog circuit 22 converts the received wireless signal to a digital signal (time domain).

The physical channel processing unit 202 is actualized by, for example, the processor 24, the memory 25, and the digital circuit 23. In other words, the processor 24 controls the memory 25 as occasion calls, cooperates with the digital circuit 23 as occasion calls, and converts the reception signal to a digital signal. In addition, the digital circuit 23 may convert the reception signal to a digital signal. The upstream control signal demodulating unit 203 is actualized by, for example, the processor 24, the memory 25, and the digital circuit 23. In other words, the processor 24 controls the memory 25 as occasion calls, cooperates with the digital circuit 23 as occasion calls, and reconstructs the upstream control information transmitted from the wireless terminal 1 from the digital signal. In addition, the digital circuit 23 may reconstruct the upstream control information transmitted from the wireless terminal 1 from the digital signal from the post-FFT reception signal.

The scheduler unit 204 is actualized by, for example, the processor 24, the memory 25, and the digital circuit 23. In other words, the processor 24 controls the memory 25 as occasion calls, cooperates with the digital circuit 23 as occasion calls, and performs scheduling (such as wireless resource allocation and MCS selection) for the wireless terminal 1 based on the per-point CQIs and the aggregated CQIs reconstructed by the upstream control signal demodulating unit 203. In addition, the digital circuit 23 may perform scheduling for the wireless terminal 1 based on the per-point CQIs and the aggregated CQIs reconstructed by the upstream control signal demodulating unit 203.

The core network communication unit 205 is actualized by, for example, the core network IF 26, the analog circuit 22, the processor 24, the memory 25, and the digital circuit 23. In other words, during transmission, the processor 24 controls the memory 25 as occasion calls, cooperates with the digital circuit 23 as occasion calls, and converts the data information and the control information to a digital baseband signal. In addition, the analog circuit 22 converts the digital baseband signal to a wired signal or a wireless signal, and the core network IF 26 transmits the wired signal or the wireless signal. On the other hand, during reception, the core network IF 26 receives a wired signal or a wireless signal, and the analog circuit 22 converts the wired signal or wireless signal to a digital baseband signal. In addition, the processor 24 controls the memory 25 as occasion calls, cooperates with the digital circuit 23 as occasion calls, and converts the digital baseband signal to data information and control information.

The data signal generating unit 206 is actualized by, for example, the processor 24, the memory 25, and the digital circuit 23. In other words, the processor 24 controls the memory 25 as occasion calls, cooperates with the digital circuit 23 as occasion calls, receives data information transmitted by the wireless terminal 1, and generates a data signal based on the data information. In addition, the digital circuit 23 may receive data information transmitted by the wireless terminal 1, and generate a data signal based on the data information. The downstream control signal generating unit 207 is actualized by, for example, the processor 24, the memory 25, and the digital circuit 23. In other words, the processor 24 controls the memory 25 as occasion calls, cooperates with the digital circuit 23 as occasion calls, receives downstream control information, and generates the downstream control signal based on the downstream control information. In addition, the digital circuit 23 may receive downstream control information, and generate the downstream control signal based on the downstream control information.

The reference signal generating unit 208 is actualized by, for example, the processor 24, the memory 25, and the digital circuit 23. In other words, the processor 24 controls the memory 25 as occasion calls, cooperates with the digital circuit 23 as occasion calls, and generates the reference signal used for channel estimation by the wireless terminal 1. In addition, the digital circuit 23 may generate the reference signal used for channel estimation by the wireless terminal 1. The physical channel multiplexing unit 209 is actualized by, for example, the processor 24, the memory 25, and the digital circuit 23. In other words, the processor 24 controls the memory 25 as occasion calls, cooperates with the digital circuit 23 as occasion calls, and performs frequency multiplexing of each physical channel. In addition, the digital circuit 23 may perform frequency multiplexing of each physical channel.

The IFFT unit 210 is actualized by, for example, the processor 24, the memory 25, and the digital circuit 23. In other words, the processor 24 controls the memory 25 as occasion calls, cooperates with the digital circuit 23 as occasion calls, and converts the frequency-domain digital signal to a time-domain digital signal. In addition, the digital circuit 23 may convert the frequency-domain digital signal to a time-domain digital signal. The transmission RF unit 211 is actualized by, for example, the wireless IF 21 and the analog circuit 22 (for performing the transmission process). In other words, the analog circuit 22 generates the downstream wireless signal including the downstream control signal and other signals (such as the data signal and reference signal), and the wireless IF 21 transmits the generated downstream wireless signal to the wireless terminal 1.

In the communication system according to the first embodiment described above, the aggregated CQI determined by the wireless terminal 1 is fed back to the TP together with the per-point CQIs. Therefore, the TP is able to obtain a highly accurate aggregated CQI when JT is applied. The TP is then able to perform scheduling and MCS determination appropriate for the wireless terminal 1 based on the feedback aggregated CQI when JT is applied. As a result, the TP no longer performs inappropriate scheduling and MCS determination resulting from the TP estimating the aggregated CQI, as in the past. Therefore, in the communication system according to the first embodiment, decrease in system throughput accompanying inappropriate scheduling and MCS determination is able to be suppressed.

According to the first embodiment, the aggregated CQI itself is fed back together with the per-point CQIs. Therefore, from one aspect, the information quantity of feedback is relatively large. Conversely, second to fifth embodiments attempt to reduce the information quantity that is fed back, compared to that according to the first embodiment, while achieving effects similar to those according to the first embodiment.

[b] Second embodiment

According to the second embodiment, the wireless terminal 1 feeds back frequency-related information to the TP, in addition to the per-point CQIs. The frequency-related information is bit-map-type information indicating whether or not the reception quality when JT is applied is relatively high by a single bit for each sub-band. According to the second embodiment, the wireless terminal 1 does not feed back the aggregated CQI itself. The wireless terminal 1 first determines the aggregated CQI, determines the bit-map-type frequency-related information based on the determined aggregated CQI, and feeds back the determined frequency-related information to the TP.

The second embodiment shares numerous common points with the first embodiment. Differences in the second embodiment from the first embodiment will mainly be described hereafter.

The functional configuration of the wireless terminal 1 according to the second embodiment is the same as that according to the first embodiment. However, the process performed by the aggregated reception quality deriving unit 105 significantly differs. In addition, in accompaniment, the processes performed by the upstream control signal generating unit 109 and the transmission RF unit 111 differ. These differences will be described in sequence below.

The aggregated reception quality deriving unit 105 according to the second embodiment determines the frequency-related information that is information related to the aggregated reception quality when the TPs perform joint transmission (aggregated reception quality), based on the channel estimation value of each TP determined by the channel estimating unit 103. Specifically, in a manner similar to that according to the first embodiment, the aggregated reception quality deriving unit 105 first determines the aggregated CQI of each combination of TPs for each sub-band. Next, the aggregated reception quality deriving unit 105 determines whether or not the aggregated CQI is a specified value (threshold) or higher for each combination of TPs, for each sub-band. The aggregated reception quality deriving unit 105 generates bit-map information indicated by a single bit for each sub-band so that, for example, the bit is set to 1 when the aggregated CQI is the specified value or higher and 0 when the aggregated CQI is lower than the specified value. The bit-map information serves as the frequency-related information to be fed back to the TP0 according to the second embodiment. The frequency-related information according to the second embodiment is referred to as bit-map-type frequency-related information.

As an example, the aggregated CQI of the sub-band sb1 is 11 and the aggregated CQI of the sub-band sb2 is 8. In addition, the specified value is 10. At this time, the aggregated reception quality deriving unit 105 sets the first bit of the bit-map-type frequency-related information to 1 because the aggregated CQI of the sub-band sb1 is the specified value or higher. In addition, the aggregated reception quality deriving unit 105 sets the second bit of the bit-map-type frequency-related information to 0 because the aggregated CQI of the sub-band sb2 is lower than the specified value.

In this example, the specified value (threshold) is a fixed value that is determined in advance. However, the following may be used as the specified value. The aggregated reception quality deriving unit 105 may use a value notified by the TP0 in advance as the specified value. In addition, the aggregated reception quality deriving unit 105 may use, for example, the value of the per-point CQI of the TP0 as the specified value for each sub-band and generate the bit-map-type frequency-related information. Furthermore, the aggregated reception quality deriving unit 105 may use a value obtained by adding an offset value to the value of the per-point CQI of the TP0 as the specified value. As a result of the offset value being implemented, whether gain by CoMP is a certain amount or higher may be checked. Here, a predetermined value or a value notified by the TP0 may be used as the offset value.

The aggregated reception quality deriving unit 105 may perform channel estimation for application of JT based on the size of phase quantity and the size of variation in scalar quantity for each combination of TPs, and generate the bit-map-type frequency-related information.

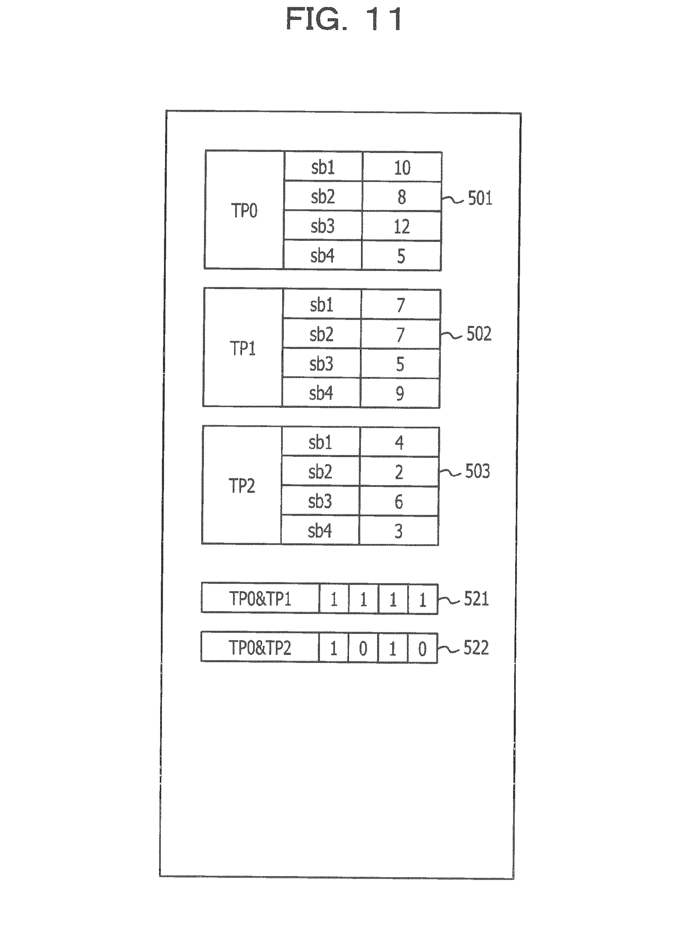

FIG. 11 illustrates an example of the upstream control signal according to the second embodiment. The upstream control signal in FIG. 11 corresponds to the specific application example in FIG. 6. The upstream control signal in FIG. 11 includes the per-point CQIs and the bit-map-type frequency-related information. In FIG. 11, the reference numerals 501, 502, and 503 indicate the per-point CQIs. In FIG. 11, reference numerals 521 and 522 indicate the bit-map-type frequency-related information. The per-point CQIs are similar to those in FIG. 7. Therefore, descriptions thereof are omitted.

In FIG. 11, the bit-map-type frequency-related information is only the number of combinations of JT by the TPs included in the CoMP coordination set (two in this example). Each piece of bit-map-type frequency-related information is bit-map information indicating whether or not the reception quality at the wireless terminal 1 when the TPs included in the CoMP coordination set use JT is the specified value or higher, using a single bit per sub-band. The bit length of each piece of bit-map-type frequency-related information amounts to the number of sub-bands (four in this example).

The upstream control signal according to the second embodiment illustrated in FIG. 11 clearly has a smaller information size compared to the upstream control signal according to the first embodiment illustrated in FIG. 7. Therefore, the communication system according to the second embodiment has an advantage in that the size of the information to be fed back is smaller compared to that in the communication system according to the first embodiment.

Returning to the description of the functional configuration of the wireless terminal 1, the upstream signal generating unit 109 according to the second embodiment generates an upstream control signal including at least the per-point CQIs and the bit-map-type frequency-related information. The upstream control information may include other arbitrary upstream control information (such as the ACK information or the NACK information).

The transmission RF unit of the wireless terminal 1 according to the second embodiment transmits a wireless signal including the upstream control signal including at least the per-point CQIs and the bit-map-type frequency-related information to the wireless base station 2. The wireless signal transmitted by the transmission RF unit of the wireless terminal 1 may include other arbitrary upstream control signals and data signals (such as the ACK signal or the NACK signal).

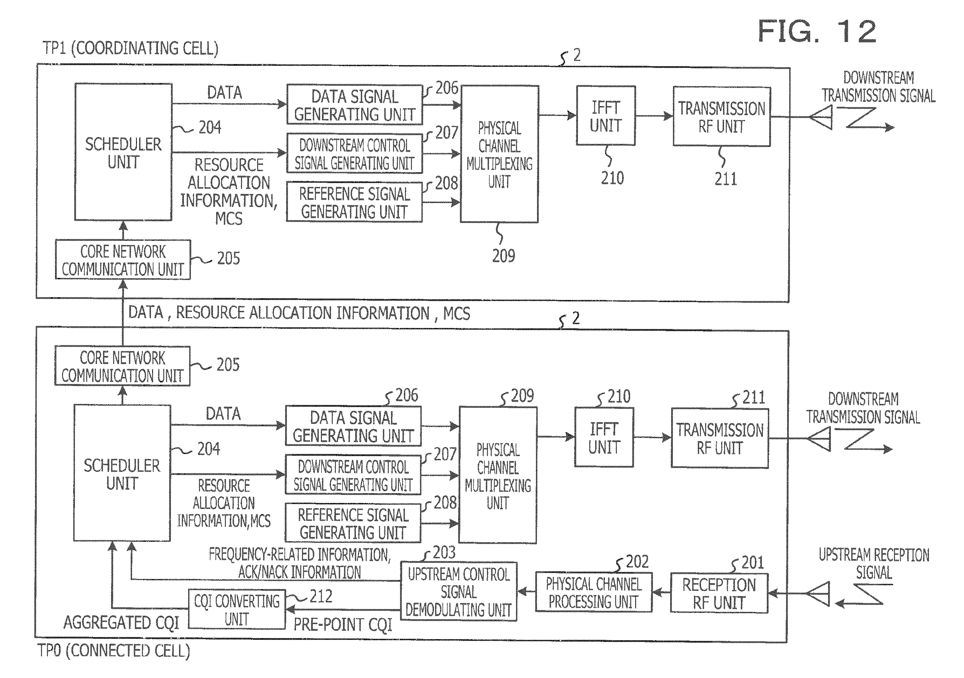

FIG. 12 is a diagram of a functional configuration of the wireless base station 2 according to the second embodiment. The wireless base station 2 according to the second embodiment includes a CQI converting unit 212 in addition to the functional configuration included in the wireless terminal 1 according to the first embodiment. In accompaniment thereto, the processes performed by the reception RF unit 201 and the upstream control signal demodulating unit 203 differ. In addition, the process performed by the scheduler unit 204 differs between the wireless base stations 2 according to the first embodiment and according to the second embodiment. These differences will be described in sequence below.

The reception RF unit 201 of the TP according to the second embodiment receives the wireless signal including the upstream control signal including at least the per-point CQIs and the bit-map-type frequency-related information from the wireless terminal 1. The wireless signal received by the reception RF unit 201 of the TP may include other arbitrary upstream control signals and data signals (such as the ACK signal or the NACK signal).

The upstream control signal demodulating unit 203 according to the second embodiment reconstructs the upstream control information including at least the per-point CQIs and the bit-map-type frequency-related information. The upstream control information generated by the upstream control signal demodulating unit 203 may include other arbitrary upstream control information (such as the ACK information or the NACK information).

The CQI converting unit 212 according to the second embodiment determines an aggregated CQI estimation value based on the per-point CQIs received from the wireless terminal 1, because the TP according to the second embodiment does not receive feedback of the aggregated CQI from the wireless terminal 1. Specifically, first, the CQI converting unit 212 determines the SINR for each TP using a SINR and CQI conversion table for the per-point CQI of each TP received from the wireless terminal 1. The CQI converting unit 212 then estimates the SINR for application of JT according to expression (6), based on the determined SINR of each TP and the RSRP of each TP separately obtained by a measurement report from the wireless terminal 1. Finally, the CQI converting unit 212 references the SINR and CQI conversion table again and converts the determined SINR for application of JT to the aggregated CQI estimation value. The CQI converting unit 212 performs such process for each combination of the TPs included in the CoMP coordination set, for each sub-band. As a result, the CQI converting unit 212 derives the aggregated CQI estimation value for each sub-band, for each combination of the TPs included in the CoMP coordination set.

The scheduler unit 204 according to the second embodiment performs the process up to determining the PF metric, in a manner similar to that according to the first embodiment. However, whereas the scheduler unit 204 according to the first embodiment uses the aggregated CQI received from the wireless terminal 1, the scheduler unit 204 according to the second embodiment uses the aggregated CQI estimation value estimated by the CQI converting unit 212.

The scheduler unit 204 according to the second embodiment then does not select a sub-band of which the reception quality is indicated as being lower than the specified value in the bit-map-type frequency-related information when allocating wireless resources to the wireless terminal 1 based on the determined PF metric. In other words, the scheduler unit 204 selects a sub-band of which the reception quality is indicated as being the specified value or higher in the bit-map-type frequency-related information for the wireless terminal 1. To actualize the selection, the scheduler unit 204 may reference the frequency-related information when deciding the wireless terminal 1 to which to allocate a certain sub-band. Then, the scheduler unit 204 may stop a wireless terminal 1 of which the reception quality of the sub-band is indicated as being lower than the specified value in the frequency-related information from being subjected to PF metric comparison.

As a result of the above, the scheduler unit 204 according to the second embodiment does not allocate wireless resources having poor reception quality to the wireless terminal 1 to which JT is applied, even when the accuracy of the aggregated CQI estimation value is poor. Therefore, decrease in system throughput is able to be suppressed.

The scheduler unit 204 according to the second embodiment may correct the CQI based on past ACK signal/NACK signal statistics, when selecting the MCS based on the aggregated CQI estimation value. For example, when a large number of NACK signals have been fed back from a certain wireless terminal 1 during a most recent specified period, the scheduler unit 204 recognizes that selection of the MCS is inappropriate. The scheduler unit 204 then corrects the aggregated CQI estimation value serving as reference for MCS selection to indicate poor reception quality and corrects the MCS in accordance with the corrected CQI. As a result, even when the accuracy of the aggregated CQI estimation value is poor, the aggregated CQI estimation value and the MCS are corrected for the wireless terminal 1 to which JT is applied. The accuracy of the aggregated CQI estimation value is improved, and decrease in throughput caused by selection of an inappropriate MCS is suppressed.

The hardware configuration of the wireless terminal 1 according to the second embodiment is the same as that according to the first embodiment. Therefore, description thereof is omitted. In addition, the correlation between the functional configuration and the hardware configuration of the wireless terminal 1 according to the second embodiment is the same as that according to the first embodiment. Therefore, description thereof is omitted.

The hardware configuration of the TP according to the second embodiment is the same as that according to the first embodiment. Therefore, description thereof is omitted. In addition, the correlation between the functional configuration and the hardware configuration of the wireless terminal 1 according to the second embodiment is the same as that according to the first embodiment, excluding the CQI converting unit 212. Therefore, description thereof is omitted. The CQI converting unit 212 is actualized by, for example, the processor 24, the memory 25, and the digital circuit 23. In other words, the processor 24 controls the memory 25 as occasion calls, cooperates with the digital circuit 23 as occasion calls, and determines the aggregated CQI estimation value based on the per-point CQIs received from the wireless terminal 1. In addition, the digital circuit 203 may determine the aggregated CQI estimation value based on the per-point CQIs received from the wireless terminal 1.

In the description above, an example is described in which whether or not the reception quality when JT is applied is relatively high is indicated by a single bit per sub-band in the bit-map-type frequency-related information. However, the reception quality when JT is applied may be expressed by a plurality of bits per sub-band in the bit-map-type frequency-related information. As an example, the reception quality may be expressed by two bits per sub-band depending on the value of the reception quality when JT is applied. In this instance, for example, the bit-map-type quality-related information may be generated so that "00" is set when the CQI for each sub-band when JT is applied is 0 to 3, "01" is set when the CQI is 4 to 7, "10" is set when the CQI is 8 to 11, and "11" is set when the CQI is 12 to 15. As a result of this variation example, the degree of high/low reception quality is able to be expressed in the bit-map-type information in addition to high/low reception quality. In addition, although the feedback information quantity increases in this variation example compared to a case in which the reception quality is expressed by a single bit per sub-band, the feedback information quantity is able to be reduced compared to a case in which the aggregated CQI itself is fed back.

In the communication system according to the second embodiment described above, as a result of the bit-map-type frequency-related information determined by the wireless terminal 1 being fed back to the TP together with the per-point CQIs, the TP is able to not allocate wireless resources having poor reception quality when JT is applied. As a result, in the communication system according to the second embodiment, decrease in system throughput accompanying inappropriate scheduling is able to be suppressed.

In addition, in the communication system according to the second embodiment, the size of information to be fed back is smaller compared to that in the communication system according to the first embodiment. As a result, waste of wireless resources due to increase in control information is able to be suppressed, and system throughput is able to be ensured.

[c] Third embodiment

A third embodiment reduces feedback information quantity compared to that according to the first embodiment, in a manner similar to that according to the second embodiment. According to the third embodiment, the wireless terminal 1 feeds back difference-type frequency-related information to the TP together with the per-point CQIs as the upstream control information. The difference-type frequency-related information is information indicating the difference (CQI difference) between the reception quality when JT is applied and the reception quality when the TP0 applies ST, for each sub-band. According to the third embodiment, the wireless terminal 1 does not feed back the aggregated CQI itself. The wireless terminal 1 first determines the aggregated CQI, determines the difference-type frequency-related information based on the determined aggregated CQI, and feeds back the determined frequency-related information to the TP.

The third embodiment shares numerous common points with the first embodiment or the second embodiment. Differences in the third embodiment from the first embodiment or the second embodiment will mainly be described hereafter.

The functional configuration of the wireless terminal 1 according to the third embodiment is the same as that according to the first embodiment. However, the process performed by the aggregated reception quality deriving unit 105 significantly differs. In addition, in accompaniment, the processes performed by the upstream control signal generating unit 109 and the transmission RF unit 111 differ. These differences will be described in sequence below.

The aggregated reception quality deriving unit 105 according to the third embodiment determines the frequency-related information that is information related to the aggregated reception quality when the TPs perform joint transmission (aggregated reception quality), based on the channel estimation value of each TP determined by the channel estimating unit 103. Specifically, in a manner similar to that according to the first and second embodiments, the aggregated reception quality deriving unit 105 first determines the aggregated CQI of each combination of TPs for each sub-band. Next, the aggregated reception quality deriving unit 105 determines the difference between the aggregated CQI and the per-point CQI in a case in which the TP0 applies ST, for each combination of TPs, for each sub-band. The information determined here serves as the frequency-related information according to the third embodiment. The frequency-related information according to the third embodiment is referred to as difference-type frequency-related information.

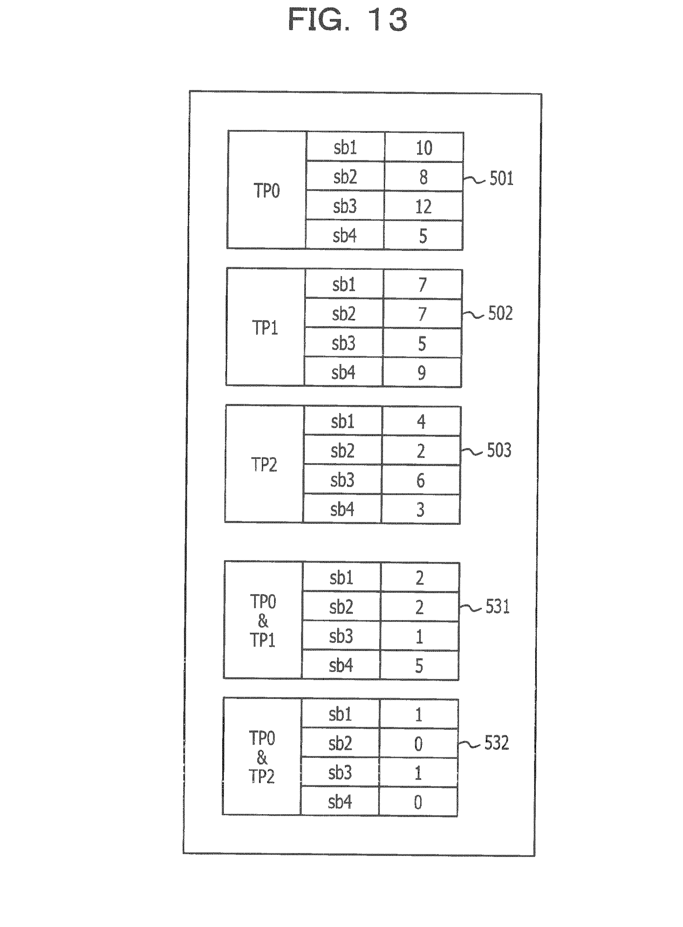

FIG. 13 illustrates an example of the upstream control signal according to the third embodiment. The upstream control signal in FIG. 13 corresponds to the specific application example in FIG. 6. The upstream control signal in FIG. 13 includes the per-point CQIs and the difference-type frequency-related information. In FIG. 13, the reference numerals 501, 502, and 503 indicate the per-point CQIs. In FIG. 13, reference numerals 531 and 532 indicate the difference-type frequency-related information. The per-point CQIs are similar to those in FIG. 7. Therefore, descriptions thereof are omitted.

In FIG. 13, the difference-type frequency-related information is composed of difference CQIs for several sub-bands (four in this example). Each difference CQI is associated with a sub-band. The difference-type frequency-related information is only the number of combinations of JT by the TPs included in the CoMP coordination set (two in this example). Each piece of difference-type frequency-related information is equivalent to the difference (CQI difference) between the CQI when each combination of TPs included in the CoMP coordination set applies JT and the CQI when the TP0 applies ST. As an example, the per-point CQI of the TP0 for the sub-band sb1 is 10 and the aggregated CQI of the TP0 and the TP1 for the sub-band sb1 is 12. At this time, the difference CQI of the TP0 and the TP1 for the sub-band sb1 is 12-10=2.

The upstream control signal according to the third embodiment illustrated in FIG. 13 has a smaller information size compared to the upstream control signal according to the first embodiment illustrated in FIG. 7. A reason for this is that the CQI difference, which is the difference between CQIs, is considered to be capable of being expressed by a fewer number of bits because the CQI difference is often a smaller value than the CQI itself. Therefore, the communication system according to the third embodiment has an advantage in that the size of the information to be fed back is smaller compared to that in the communication system according to the first embodiment.

The upstream signal generating unit 109 according to the third embodiment generates an upstream control signal including at least the per-point CQIs and the difference-type frequency-related information. The upstream control information may include other arbitrary upstream control information (such as the ACK information or the NACK information).

The transmission RF unit 111 of the wireless terminal 1 according to the third embodiment transmits a wireless signal including the upstream control signal including at least the per-point CQIs and the difference-type frequency-related information to the wireless base station 2. The wireless signal transmitted by the transmission RF unit 111 of the wireless terminal 1 may include other arbitrary upstream control signals and data signals (such as the ACK signal or the NACK signal).

A functional configuration of the wireless base station 2 according to the third embodiment will be described. Although the wireless base station 2 according to the third embodiment is the same as the functional configuration included in the wireless base station 2 according to the second embodiment, the processes performed by the reception RF unit 201, the upstream control signal demodulating unit 203, the CQI converting unit 212, and the scheduler unit 204 differ. These differences will be described in sequence below.

The reception RF unit 201 of the TP according to the third embodiment receives the wireless signal including the upstream control signal including at least the per-point CQIs and the difference-type frequency-related information from the wireless terminal 1. The wireless signal received by the reception RF unit 201 of the TP may include other arbitrary upstream control signals and data signals (such as the ACK signal or the NACK signal).

The upstream control signal demodulating unit 203 according to the third embodiment reconstructs the upstream control information including at least the per-point CQIs and the difference-type frequency-related information. The upstream control information generated by the upstream control signal generating unit 109 may include other arbitrary upstream control information (such as the ACK information or the NACK information).

The CQI converting unit 212 according to the third embodiment estimates the aggregated CQI based on the per-point CQIs and the difference-type frequency-related information received from the wireless terminal 1. The CQI converting unit 212 determines the aggregated CQI estimation value from the per-point CQI of the TP0 serving as reference and the difference CQI included in the frequency-related information for each sub-band. As an example, the per-point CQI of the TP0 for the sub-band sb1 is 10, and the difference CQI when the TP0 and the TP1 applies JT for the sub-band sb1 is 2. At this time, the CQI converting unit 212 is able to determine the aggregated CQI estimation value of the TP0 and the TP1 for the sub-band sb1 to be 10+2=12.

The scheduler unit 204 according to the third embodiment generally performs a process similar to that of the scheduler unit 204 according to the first embodiment. However, whereas the scheduler unit 204 according to the first embodiment uses the aggregated CQI received from the wireless terminal 1, the scheduler unit 204 according to the third embodiment uses the aggregated CQI estimation value estimated by the CQI converting unit 212.

The hardware configuration of the wireless terminal 1 according to the third embodiment is the same as that according to the first embodiment. Therefore, description thereof is omitted. In addition, the correlation between the functional configuration and the hardware configuration of the wireless terminal 1 according to the third embodiment is the same as that according to the first embodiment. Therefore, description thereof is omitted.

The hardware configuration of the TP according to the third embodiment is the same as that according to the second embodiment. Therefore, description thereof is omitted. In addition, the correlation between the functional configuration and the hardware configuration of the wireless terminal 1 according to the third embodiment is the same as that according to the second embodiment. Therefore, description thereof is omitted.

In the communication system according to the third embodiment described above, as a result of the difference-type frequency-related information determined by the wireless terminal 1 being fed back to the TP together with the per-point CQIs, the TP is able to not allocate wireless resources having poor reception quality when JT is applied. As a result, in the communication system according to the third embodiment, decrease in system throughput accompanying inappropriate scheduling is able to be suppressed.

In addition, in the communication system according to the third embodiment, the size of information to be fed back is smaller compared to that in the communication system according to the first embodiment. As a result, waste of wireless resources due to increase in control information is able to be suppressed, and system throughput is able to be ensured.

[d] Fourth embodiment

According to a fourth embodiment, the wireless terminal 1 feeds back frequency-related information to the TP together with the per-point CQIs. The frequency-related information is information listing sub-bands of which the reception quality when JT is applied is lower or higher than a specified value. According to the fourth embodiment, the wireless terminal 1 does not feed back the aggregated CQI itself. The wireless terminal 1 first determines the aggregated CQI, determines the listing-type frequency-related information based on the determined aggregated CQI, and feeds back the determined frequency-related information to the TP.

The fourth embodiment shares numerous common points with the first embodiment or the second embodiment. Differences in the fourth embodiment from the first embodiment or the second embodiment will mainly be described hereafter.

The functional configuration of the wireless terminal 1 according to the fourth embodiment is the same as that according to the second embodiment. However, the process performed by the aggregated reception quality deriving unit 105 significantly differs. In addition, in accompaniment, the processes performed by the upstream control signal generating unit 109 and the transmission RF unit 111 differ. These differences will be described in sequence below.

The aggregated reception quality deriving unit 105 according to the fourth embodiment determines the frequency-related information that is information related to the aggregated reception quality when the TPs perform joint transmission, based on the channel estimation value of each TP determined by the channel estimating unit 103. Specifically, in a manner similar to that according to the first embodiment, the aggregated reception quality deriving unit 105 first determines the aggregated CQI of each combination of TPs for each sub-band. Next, the aggregated reception quality deriving unit 105 determines whether or not the aggregated CQI is a specified value (threshold) or higher for each combination of TPs, for each sub-band. For example, the aggregated reception quality deriving unit 105 determines sub-bands of which the aggregated CQI is lower than the specified value and generates information listing identifiers of the determined sub-bands. The information serves as the frequency-related information to be fed back to the TP0 according to the fourth embodiment. The frequency-related information according to the fourth embodiment is referred to as listing-type frequency-related information.

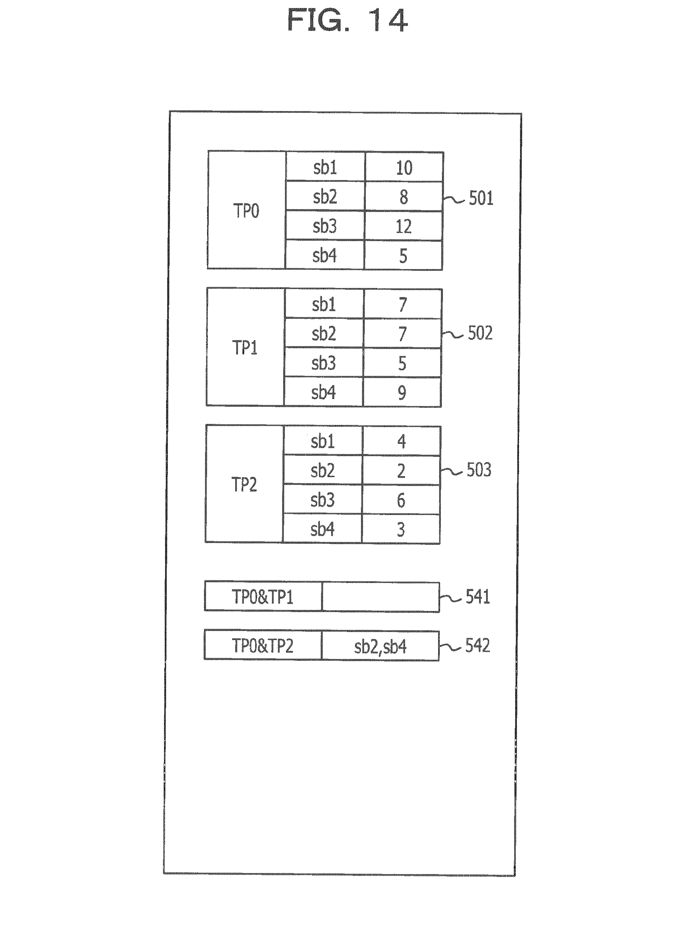

As an example, the respective aggregated CQIs of sub-bands sb1, sb2, sb3, and sb4 are 11, 8, 13, and 5. In addition, the specified value is 10. At this time, the aggregated reception quality deriving unit 105 generates the listing-type frequency-related information "sb2, sb4" (in the instance of TP0 and TP2 in FIG. 14). As another example, the respective aggregated CQIs of the sub-bands sb1, sb2, sb3, and sb4 are 12, 10, 13, and 10. In addition, the specified value is 10. At this time, the aggregated reception quality deriving unit 105 sets a null set as the listing-type frequency-related information (in the instance of TP0 and TP1 in FIG. 14).

In this example, the specified value (threshold) is a fixed value that is determined in advance. However, the following may be used as the specified value. The aggregated reception quality deriving unit 105 may use a value notified by the TP0 in advance as the specified value. In addition, the aggregated reception quality deriving unit 105 may use, for example, the value of the per-point CQI of the TP0 as the specified value for each sub-band and generate the bit-map-type frequency-related information. Furthermore, the aggregated reception quality deriving unit 105 may use a value obtained by adding an offset value to the value of the per-point CQI of the TP0 as the specified value. As a result of the offset value being implemented, whether gain by CoMP is a certain amount or higher may be checked. Here, a predetermined value or a value notified by the TP0 may be used as the offset value.

In addition, contrary to the above-described example, the aggregated reception quality deriving unit 105 may determine sub-bands of which the aggregated CQI is the "specified value or higher" and generate the information listing the identifiers of the determined sub-bands. The process in a case in which the aggregated CQI is the "specified value or higher" substantially corresponds to the process in a case in which the aggregated CQI is "less than the specified value". Therefore, a detailed description thereof is omitted.

FIG. 14 illustrates an example of the upstream control signal according to the fourth embodiment. The upstream control signal in FIG. 14 corresponds to the specific application example in FIG. 6. The upstream control signal in FIG. 14 includes the per-point CQIs and the listing-type frequency-related information. In FIG. 14, the reference numerals 501, 502, and 503 indicate the per-point CQIs. In FIG. 14, reference numerals 541 and 542 indicate the listing-type frequency-related information. The per-point CQIs are similar to those in FIG. 7. Therefore, descriptions thereof are omitted.

In FIG. 14, the listing-type frequency-related information is only the number of combinations of JT by the TPs included in the CoMP coordination set (two in this example). Each piece of listing-type frequency-related information is information listing sub-bands of which the reception quality at the wireless terminal 1 when the combination of TPs included in the CoMP coordination set applies JT is lower than the specified value.

The upstream control signal according to the fourth embodiment illustrated in FIG. 14 clearly has a smaller information size compared to the upstream control signal according to the first embodiment illustrated in FIG. 7. Therefore, the communication system according to the fourth embodiment has an advantage in that the size of the information to be fed back is smaller compared to that in the communication system according to the first embodiment.

Returning to the description of the functional configuration of the wireless terminal 1, the upstream signal generating unit 109 according to the fourth embodiment generates an upstream control signal including at least the per-point CQIs and the listing-type frequency-related information. The upstream control information may include other arbitrary upstream control information (such as the ACK information or the NACK information).

The transmission RF unit 111 of the wireless terminal 1 according to the fourth embodiment transmits a wireless signal including the upstream control signal including at least the per-point CQIs and the listing-type frequency-related information to the wireless base station 2. The wireless signal transmitted by the transmission RF unit 111 of the wireless terminal 1 may include other arbitrary upstream control signals and data signals (such as the ACK signal or the NACK signal).

A functional configuration of the wireless base station 2 according to the fourth embodiment will be described. Although the wireless base station 2 according to the fourth embodiment is similar to the functional configuration included in the wireless terminal 1 according to the second embodiment, the processes performed by the reception RF unit 201, the upstream control signal demodulating unit 203, and the scheduler unit 204 differ. These differences will be described in sequence below.

The reception RF unit 201 of the TP according to the fourth embodiment receives the wireless signal including the upstream control signal including at least the per-point CQIs and the listing-type frequency-related information from the wireless terminal 1. The wireless signal received by the reception RF unit 201 of the TP may include other arbitrary upstream control signals and data signals (such as the ACK signal or the NACK signal).

The upstream control signal demodulating unit 203 according to the fourth embodiment reconstructs the upstream control information including at least the per-point CQIs and the listing-type frequency-related information. The upstream control information generated by the upstream control signal generating unit 109 may include other arbitrary upstream control information (such as the ACK information or the NACK information).

The scheduler unit 204 according to the fourth embodiment performs the process up to determining the PF metric, in a manner similar to that according to the second embodiment. When the scheduler unit 204 according to the fourth embodiment allocates wireless resources to the wireless terminal 1 based on the determined PF metric, the scheduler unit 204 does not select a sub-band of which the reception quality is indicated as being lower than the specified value in the listing-type frequency-related information. In other words, the scheduler unit 204 selects a sub-band of which the reception quality is not indicated as being lower than the specified value in the listing-type frequency-related information, for the wireless terminal 1. To actualize the selection, the scheduler unit 204 may reference the frequency-related information when deciding the wireless terminal 1 to which to allocate a certain sub-band. Then, the scheduler unit 204 may stop a wireless terminal 1 of which the reception quality of the sub-band is indicated as being lower than the specified value in the frequency-related information from being subjected to PF metric comparison.

As a result of the above, the scheduler unit 204 according to the fourth embodiment does not allocate wireless resources having poor reception quality to the wireless terminal 1 to which JT is applied, even when the accuracy of the aggregated CQI estimation value is poor. Therefore, decrease in system throughput is able to be suppressed.

In a manner similar to that according to the second embodiment, the scheduler unit 204 according to the fourth embodiment may correct the CQI based on past ACK signal/NACK signal statistics, when selecting the MCS based on the aggregated CQI estimation value.

The hardware configuration of the wireless terminal 1 according to the fourth embodiment is the same as that according to the first embodiment. Therefore, description thereof is omitted. In addition, the correlation between the functional configuration and the hardware configuration of the wireless terminal 1 according to the fourth embodiment is the same as that according to the first embodiment. Therefore, description thereof is omitted.

The hardware configuration of the TP according to the fourth embodiment is the same as that according to the second embodiment. Therefore, description thereof is omitted. In addition, the correlation between the functional configuration and the hardware configuration of the wireless terminal 1 according to the fourth embodiment is the same as that according to the second embodiment. Therefore, description thereof is omitted.

In the communication system according to the fourth embodiment described above, as a result of the listing-type frequency-related information determined by the wireless terminal 1 being fed back to the TP together with the per-point CQIs, the TP is able to not allocate wireless resources having poor reception quality when JT is applied. As a result, in the communication system according to the fourth embodiment, decrease in system throughput accompanying inappropriate scheduling is able to be suppressed.

In addition, in the communication system according to the fourth embodiment, the size of information to be fed back is smaller compared to that in the communication system according to the first embodiment. As a result, waste of wireless resources due to increase in control information is able to be suppressed, and system throughput is able to be ensured.

[e] Fifth embodiment

A fifth embodiment is a variation example of the fourth embodiment. An overview of the fifth embodiment will be described below.

The aggregated reception quality deriving unit 105 according to the fourth embodiment determines the sub-bands of which, for example, the aggregated CQI is lower than the specified value and generates the listing-type frequency-related information listing the identifiers of the determined sub-bands. Conversely, the aggregated reception quality deriving unit 105 according to the fifth embodiment is the same up to determining the sub-bands of which, for example, the aggregated CQI is lower than the specified value. Subsequently, the aggregated reception quality deriving unit 105 according to the fifth embodiment sets the CQI of the sub-band that is lower than the specified value to a minimum value (0 or 1), instead of generating the listing-type frequency-related information. The wireless terminal 1 feeds back the CQI to the TP0.

According to the fifth embodiment, from the perspective of the wireless terminal 1, the sub-band of which the CQI is set to the minimum value is very unlikely to be selected. Therefore, effects similar to those of example 4 are achieved. In addition, the fifth embodiment may be performed within the framework of the workings of currently existing CQIs and therefore has an advantage of being actualized without modification of the system. Details of the fifth embodiment are omitted.

According to the first to fifth embodiments, when the wireless base station 2 performs scheduling (wireless resource allocation) for the wireless terminal 1 is described. However, a managing device or the like connected to the wireless core network may perform scheduling (wireless resource allocation) for the wireless terminal 1.

**Claims**

1. A wireless communication system comprising:

a wireless base station that performs joint transmission with another wireless base station to transmit same data to a wireless terminal; and

the wireless terminal that transmits feedback information to the wireless base station, the feedback information being related to reception quality for each frequency domain based on a channel estimation value for each frequency domain when the wireless base station and the another wireless base station perform the joint transmission.

2. The wireless communication system according to claim 1, wherein
the feedback information is information indicating whether or not the reception quality when the wireless base station and the another wireless base station perform the joint transmission is higher than a specified value using a single bit per frequency domain.

3. The wireless communication system according to claim 1, wherein
the feedback information is information indicating a difference between the reception quality when the wireless base station and the another wireless base station perform the joint transmission and the reception quality when the wireless base station independently performs transmission for each frequency domain.

4. The wireless communication system according to claim 1, wherein
the feedback information is information in which the reception quality when the wireless base station and the another wireless base station perform the joint transmission specifies a frequency domain lower than a specified value or a frequency domain higher than the specified value.

5. The wireless communication system according to any one of claims 1 to 4, wherein
the base station performs frequency allocation based on the feedback information when the joint transmission is performed to the wireless terminal.

6. A wireless terminal comprising:

a transmitting unit that transmits feedback information to a wireless base station that performs joint transmission with another wireless base station to transmit same data to the wireless terminal, the feedback information being related to reception quality for each frequency domain based on a channel estimation value for each frequency domain when the wireless base station and the another wireless base station perform the joint transmission.

7. The wireless terminal according to claim 6, wherein
the feedback information is information indicating whether or not the reception quality when the wireless base station and the another wireless base station perform the joint transmission is higher than a specified value using a single bit per frequency domain.

8. The wireless terminal according to claim 6, wherein
the feedback information is information indicating a difference between the reception quality when the wireless base station and the another wireless base station perform the joint transmission and the reception quality when the wireless base station independently performs transmission for each frequency domain.

9. The wireless communication terminal according to claim 6, wherein
the feedback information is information in which the reception quality when the wireless base station and the another wireless base station perform the joint transmission specifies a frequency domain lower than a specified value or a frequency domain higher than the specified value.

10. A wireless base station that performs joint transmission with another wireless base station to transmit same data to a wireless terminal, the wireless base station comprising:

a receiving unit that receives feedback information from the terminal, the feedback information being related to reception quality for each frequency domain based on a channel estimation value for each frequency domain when the wireless base station and the another wireless base station perform the joint transmission; and
a transmitting unit that performs the joint transmission using a frequency domain allocated based on the feedback information.

**11.** A wireless communication method in a wireless system including a wireless base station that performs joint transmission with another wireless base station to transmit same data to a wireless terminal, the wireless communication method wherein

the terminal transmits feedback information to the wireless base station, the feedback information being related to reception quality for each frequency domain based on a channel estimation value for each frequency domain when the wireless base station and the another wireless base station perform the joint transmission.

**12.** The wireless communication method according to claim 11, wherein

the feedback information is information indicating whether or not the reception quality when the wireless base station and the another wireless base station perform the joint transmission is higher than a specified value using a single bit per frequency domain.

**13.** The wireless communication method according to claim 11, wherein

the feedback information is information indicating a difference between the reception quality when the wireless base station and the another wireless base station perform the joint transmission and the reception quality when the wireless base station independently performs transmission for each frequency domain.

**14.** The wireless communication method according to claim 11, wherein

the feedback information is information in which the reception quality when the wireless base station and the another wireless base station perform the joint transmission specifies a frequency domain lower than a specified value or a frequency domain higher than the specified value.

**15.** The wireless communication method according to any one of claims 11 to 14, wherein

the base station performs frequency allocation based on the feedback information when the joint transmission is performed to the wireless terminal.

# FIG. 1

| CQI INDEX | MODULATION | CODING RATE × 1024 | EFFICIENCY |
|---|---|---|---|
| 0 | OUT OF RANGE | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

# FIG. 2

TP0 (CONNECTED CELL)

SCHEDULER → DATA SIGNAL GENERATION $S_0$

CQI

$H_0$

UE 1

2

SCHEDULER → DATA SIGNAL GENERATION $S_0$

TP1 (COORDINATING CELL)

$H_1$

$H_2$

2

SCHEDULER → DATA SIGNAL GENERATION $S_1$

TP2 (INTERFERING CELL)

2

# FIG. 3

TO OTHER NETWORK

WIRELESS CORE NETWORK

WIRELESS BASE STATION (eNB) 2c

WIRELESS BASE STATION (eNB) 2a

WIRELESS BASE STATION (eNB) 2b

2c1 RRH

2c2 RRH

WIRELESS ACCESS NETWORK

1 WIRELESS TERMINAL (UE)

## FIG. 4A

POWER

$|H_0|^2$

$|H_1|^2$

FREQUENCY

## FIG. 4B

PHASE

$arg(H_0)$

$arg(H_1)$

FREQUENCY

## FIG. 4C

POWER

$|H_0 + H_1|^2$

$|H_0|^2 + |H_1|^2$

FREQUENCY

# FIG. 5

DOWNSTREAM RECEPTION SIGNAL

RECEPTION RF UNIT (101) → FFT UNIT (102) → DATA SIGNAL DEMODULATING UNIT (107) → ERROR DETECTING UNIT (108) → DATA

RESOURCE ALLOCATION INFORMATION
MCS

DOWNSTREAM CONTROL SIGNAL DEMODULATING UNIT (106)

CHANNEL ESTIMATING UNIT (103)

INDIVIDUAL RECEPTION QUALITY DERIVING UNIT (104)

AGGREGATED RECEPTION QUALITY DERIVING UNIT (105)

UPSTREAM CONTROL SIGNAL GENERATING UNIT (109)

AGGREGATED CQI
PER-POINT CQI
ACK/NACK INFORMATION

UPSTREAM TRANSMISSION SIGNAL

TRANSMITTION RF UNIT (111) ← PHYSICAL CHANNEL PROCESSING UNIT (110) ← UPSTREAM CONTROL SIGNAL GENERATING UNIT (109)

EP 2 811 781 A1

# FIG. 6

CoMP COORDINATION SET

TP0 — 2

sb1=10,
sb2=8,
sb3=12,
sb4=5

UE — 1

sb1=7,
sb2=7,
sb3=5,
sb4=9

TP1 — 2

sb1=4,
sb2=2,
sb3=6,
sb4=3

sb1=2,
sb2=3,
sb3=2,
sb4=1

TP2 — 2

TP3 — 2

# FIG. 7

| TP0 | sb1 | 10 | ~501 |
|---|---|---|---|
|  | sb2 | 8 |  |
|  | sb3 | 12 |  |
|  | sb4 | 5 |  |

| TP1 | sb1 | 7 | ~502 |
|---|---|---|---|
|  | sb2 | 7 |  |
|  | sb3 | 5 |  |
|  | sb4 | 9 |  |

| TP2 | sb1 | 4 | ~503 |
|---|---|---|---|
|  | sb2 | 2 |  |
|  | sb3 | 6 |  |
|  | sb4 | 3 |  |

| TP0 & TP1 | sb1 | 12 | ~511 |
|---|---|---|---|
|  | sb2 | 10 |  |
|  | sb3 | 13 |  |
|  | sb4 | 10 |  |

| TP0 & TP2 | sb1 | 11 | ~512 |
|---|---|---|---|
|  | sb2 | 8 |  |
|  | sb3 | 13 |  |
|  | sb4 | 5 |  |

FIG. 8

TP1 (COORDINATING CELL)

2

SCHEDULER UNIT ~204

DATA → DATA SIGNAL GENERATING UNIT 206

RESOURCE ALLOCATION INFORMATION, MCS → DOWNSTREAM CONTROL SIGNAL GENERATING UNIT 207

REFERENCE SIGNAL GENERATING UNIT 208

PHYSICAL CHANNEL MULTIPLEXING UNIT 209

IFFT UNIT 210

TRANSMISSION RF UNIT 211

DOWNSTREAM TRANSMISSION SIGNAL

CORE NETWORK COMMUNICATION UNIT ~205

DATA , RESOURCE ALLOCATION INFORMATION , MCS

2

CORE NETWORK COMMUNICATION UNIT ~205

SCHEDULER UNIT ~204

DATA → DATA SIGNAL GENERATING UNIT 206

RESOURCE ALLOCATION INFORMATION, MCS → DOWNSTREAM CONTROL SIGNAL GENERATING UNIT 207

REFERENCE SIGNAL GENERATING UNIT 208

PHYSICAL CHANNEL MULTIPLEXING UNIT 209

IFFT UNIT 210

TRANSMISSION RF UNIT 211

DOWNSTREAM TRANSMISSION SIGNAL

ACK/NACK INFORMATION

UPSTREAM CONTROL SIGNAL DEMODULATING UNIT 203

PHYSICAL CHANNEL PROCESSING UNIT 202

RECEPTION RF UNIT 201

UPSTREAM RECEPTION SIGNAL

PRE-POINT CQI AGGREGATED CQI

TP0 (CONNECTED CELL)

EP 2 811 781 A1

# FIG. 9

# FIG. 10

# FIG. 11

| TP0 | sb1 | 10 |
|-----|-----|----|
|     | sb2 | 8  |
|     | sb3 | 12 |
|     | sb4 | 5  |

~ 501

| TP1 | sb1 | 7 |
|-----|-----|---|
|     | sb2 | 7 |
|     | sb3 | 5 |
|     | sb4 | 9 |

~ 502

| TP2 | sb1 | 4 |
|-----|-----|---|
|     | sb2 | 2 |
|     | sb3 | 6 |
|     | sb4 | 3 |

~ 503

| TP0&TP1 | 1 | 1 | 1 | 1 |
|---------|---|---|---|---|

~ 521

| TP0&TP2 | 1 | 0 | 1 | 0 |
|---------|---|---|---|---|

~ 522

FIG. 12

# FIG. 13

| TP0 | sb1 | 10 | |
|-----|-----|----|--|
| | sb2 | 8 | ~501 |
| | sb3 | 12 | |
| | sb4 | 5 | |

| TP1 | sb1 | 7 | |
|-----|-----|---|--|
| | sb2 | 7 | ~502 |
| | sb3 | 5 | |
| | sb4 | 9 | |

| TP2 | sb1 | 4 | |
|-----|-----|---|--|
| | sb2 | 2 | ~503 |
| | sb3 | 6 | |
| | sb4 | 3 | |

| TP0 & TP1 | sb1 | 2 | |
|-----------|-----|---|--|
| | sb2 | 2 | ~531 |
| | sb3 | 1 | |
| | sb4 | 5 | |

| TP0 & TP2 | sb1 | 1 | |
|-----------|-----|---|--|
| | sb2 | 0 | ~532 |
| | sb3 | 1 | |
| | sb4 | 0 | |

# FIG. 14

| TP0 | sb1 | 10 | |
|-----|-----|----|---|
|     | sb2 | 8  | ~501 |
|     | sb3 | 12 | |
|     | sb4 | 5  | |

| TP1 | sb1 | 7 | |
|-----|-----|---|---|
|     | sb2 | 7 | ~502 |
|     | sb3 | 5 | |
|     | sb4 | 9 | |

| TP2 | sb1 | 4 | |
|-----|-----|---|---|
|     | sb2 | 2 | ~503 |
|     | sb3 | 6 | |
|     | sb4 | 3 | |

| TP0&TP1 | | ~541 |
|---------|---|------|

| TP0&TP2 | sb2,sb4 | ~542 |
|---------|---------|------|

**INTERNATIONAL SEARCH REPORT**

International application No.

PCT/JP2012/000694

A. CLASSIFICATION OF SUBJECT MATTER
*H04W28/16*(2009.01)i, *H04W16/28*(2009.01)i, *H04W24/10*(2009.01)i

According to International Patent Classification (IPC) or to both national classification and IPC

B. FIELDS SEARCHED

Minimum documentation searched (classification system followed by classification symbols)
H04W4/00-99/00, H04B7/24-7/26, H04J11/00, H04J99/00

Documentation searched other than minimum documentation to the extent that such documents are included in the fields searched
Jitsuyo Shinan Koho       1922-1996   Jitsuyo Shinan Toroku Koho   1996-2012
Kokai Jitsuyo Shinan Koho 1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Ericsson, ST-Ericsson, "Hierarchical Feedback for DL CoMP and DL MIMO", 3GPP TSG-RAN WG1 #66bis, R1-113354, 2011.10 | 1,5,6,10,11, 15 |
| Y | | 2-4,7-9, 12-14 |
| Y | JP 2005-198213 A (Toshiba Corp.), 21 July 2005 (21.07.2005), paragraph [0038] & US 2005/0152387 A1   & EP 1553717 B1 & CN 1638307 A | 2,4,7,9,12, 14 |
| Y | WO 2009/044536 A1 (Panasonic Corp.), 09 April 2009 (09.04.2009), paragraphs [0067] to [0071] & US 2010/0208606 A1   & EP 2205017 A1 & CN 101809919 A       & KR 10-2010-0059931 A | 3,8,13 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 March, 2012 (29.03.12) | 10 April, 2012 (10.04.12) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| | International application No. |
|---|---|
| | PCT/JP2012/000694 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2004/114608 A1 (Nippon Telegraph and Telephone Corp.), 29 December 2004 (29.12.2004), page 6, line 21 to page 7, line 2; fig. 12 & US 2006/0087998 A1 & EP 1635516 A1 & CA 2515537 A & KR 10-2005-0106113 A & CN 1759576 A | 4,9,14 |
| A | NTT DOCOMO, "CSI Feedback Scheme for JT CoMP", 3GPP TSG RAN WG1 Meeting #66bis, R1-113292, 2011.10, pp.1-9 | 1-15 |

Form PCT/ISA/210 (continuation of second sheet) (July 2009)

**EP 2 811 781 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TR36.814 V9.0.0,* March 2010

- *3GPP TR36.819 V11.0.0,* September 2011